(19) Europäisches Patentamt
European Patent Office
Office européen des brevets

(11) **EP 4 782 099 A1**

(12) **EUROPEAN PATENT APPLICATION**
published in accordance with Art. 153(4) EPC

(43) Date of publication:
29.07.2026 Bulletin 2026/31

(21) Application number: 24867832.8

(22) Date of filing: 24.05.2024

(51) International Patent Classification (IPC):
*B01J 19/18* (2006.01)   *F27B 7/42* (2006.01)
*F27D 19/00* (2006.01)   *F27D 21/00* (2006.01)

(52) Cooperative Patent Classification (CPC):
B01J 19/18; F27B 7/42; F27D 19/00; F27D 21/00

(86) International application number:
PCT/JP2024/019132

(87) International publication number:
WO 2025/062745 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 JP 2023158236

(71) Applicant: The Japan Steel Works, Ltd.
Tokyo 141-0032 (JP)

(72) Inventors:
• UEDA, Naoki
Tokyo 141-0032 (JP)
• HIRAMATSU, Seiya
Tokyo 141-0032 (JP)
• FURUKI, Kenichi
Tokyo 141-0032 (JP)
• NAKAMURA, Satoru
Tokyo 141-0032 (JP)

(74) Representative: Simmons & Simmons LLP
(Munich)
Lehel Carré
Gewürzmühlstraße 11
80538 Munich (DE)

(54) **REACTION DEVICE**

(57) A reaction apparatus capable of preventing a situation in which a reaction vessel cannot normally operate due to deformation of the reaction vessel because of thermal expansion or thermal contraction thereof is provided. A reaction apparatus (10A) includes: a cylindrical reaction vessel (100) including an intermediate part (A3) between a supply part and a delivery part; a temperature control unit configured to control a temperature of the intermediate part; the supply part and the delivery part; and a conveyance mechanism configured to convey the substance to be treated from a side of the reaction vessel close to the supply part to a side of the reaction vessel close to the delivery part through the intermediate part, in which the temperature control unit controls a temperature increase rate or a temperature decrease rate of the intermediate part in such a way that an actual displacement rate of a specific part (E) of the reaction vessel follows a desirable displacement rate of the specific part of the reaction vessel.

Fig. 19

EP 4 782 099 A1

## Description

### Technical Field

The present invention relates to a reaction apparatus.

### Background Art

There is a reaction apparatus for manufacturing a desired product from a powder-granular substance to be treated by providing a specific atmosphere to it. For example, a reaction apparatus, commonly referred to as a rotary kiln, heats a hollow reaction vessel that rotates around a central axis. A desired product is manufactured by passing materials through this reaction vessel while rolling them. A reaction apparatus, for example, referred to as a roller hearth kiln, manufactures a desired product by passing a substance to be treated and workpieces through a tunnel-type reaction vessel. Various other reaction apparatuses have been developed.

For example, Patent Literature 1 discloses the following reaction apparatus. The reaction apparatus includes a screw feeder body serving as a pressure reaction vessel, a catalyst supply part for introducing a catalyst into the screw feeder body, and a lower hydrocarbon supply part for introducing lower hydrocarbons into the screw feeder body. The reaction apparatus includes a screw for transferring generated nano-carbon, a solid discharge unit for discharging the catalyst and nano-carbon transferred by the screw, and a gas discharge unit for discharging generated hydrogen outside the feeder body.

### Citation List

### Patent Literature

[Patent Literature 1] Japanese Unexamined Patent Application Publication No. 2006-290682

### Summary of Invention

### Technical Problem

However, there is a problem, in the aforementioned reaction apparatus, that if the temperature of the reaction vessel is changed, the reaction vessel, the conveyance mechanism, or the like is deformed due to thermal expansion or thermal contraction, which prevents the reaction apparatus from normally operating.

The other problems of the related art and the novel characteristics of the present invention will be made apparent from the descriptions of the specification and the accompanying drawings.

### Solution to Problem

A reaction apparatus according to one embodiment includes: a cylindrical reaction vessel including an intermediate part between a supply part and a delivery part; a temperature control unit configured to control a temperature of the intermediate part; the supply part configured to supply a substance to be treated to the reaction vessel and the delivery part configured to deliver a product from the reaction vessel; and a conveyance mechanism configured to convey the substance to be treated from a side of the reaction vessel close to the supply part to a side of the reaction vessel close to the delivery part through the intermediate part, in which the temperature control unit controls a temperature increase rate or a temperature decrease rate of the intermediate part until a temperature of the intermediate part reaches a target temperature in such a way that an actual displacement rate of a specific part of the reaction vessel follows a desirable displacement rate of the specific part of the reaction vessel.

### Advantageous Effects of Invention

According to the present disclosure, it is possible to provide a reaction apparatus capable of preventing a situation in which a reaction vessel, a conveyance mechanism, or the like cannot normally operate due to deformation thereof because of thermal expansion or thermal contraction.

### Brief Description of Drawings

Fig. 1 is a side view of a reaction apparatus according to a first embodiment;

Fig. 2 is a block diagram of the reaction apparatus according to the first embodiment;

Fig. 3 is a flowchart of processing performed by the reaction apparatus;

Fig. 4 is a side view of a reaction apparatus according to a second embodiment;

Fig. 5A is a diagram showing a specific example 1 in which the other end side A2 of a reaction vessel 100 is supported in a state in which it is movable in a direction of a major axis $AX_{100}$ of the reaction vessel 100;

Fig. 5B is a diagram showing a specific example 2 in which the other end side A2 of the reaction vessel 100 is supported in a state in which it is movable in the direction of the major axis $AX_{100}$ of the reaction vessel 100;

Fig. 5C is a diagram showing a specific example 3 in which the other end side A2 of the reaction vessel 100 is supported in a state in which it is movable in the direction of the major axis $AX_{100}$ of the reaction vessel 100;

Fig. 6 is a configuration example in which the reaction vessel 100 is supported in a rotatable manner;

Fig. 7 is an arrow view as seen from a direction of an arrow AR2 in Fig. 5A;

Fig. 8 is a schematic view of a specific example 4 in which the other end side A2 of the reaction vessel 100 is supported in a state in which it is rotatable about a rotation axis $AX_V$ (vertical axis), in addition to being movable in the direction of the major axis $AX_{100}$ of the reaction vessel 100;

Fig. 9 shows an example of a biaxial reaction vessel 100A;

Fig. 10 is a schematic view of a specific example 5 in which the other end side A2 of the reaction vessel 100 is supported in a state in which it is rotatable about the rotation axis $AX_V$ (vertical axis) and in a state in which the other end side A2 of the reaction vessel 100 is movable in a minor axis direction (see an arrow AR6 in Fig. 10), in addition to being movable in the direction of the major axis $AX_{100}$ of the reaction vessel 100;

Fig. 11A is a diagram showing a state in which the reaction vessel 100 is twisted;

Fig. 11B is a diagram showing a state in which the reaction vessel 100 is inclined;

Fig. 11C is a diagram showing a state in which the twisting of the reaction vessel 100 is controlled;

Fig. 11D is a diagram showing a state in which the inclination of the reaction vessel 100 is controlled;

Fig. 12 is a perspective view of a temperature control region 110;

Fig. 13 is a block diagram showing an electric connection relation between heating units H1-H4 and a temperature control unit 202;

Fig. 14A shows a varied pattern example of the reaction vessel 100;

Fig. 14B shows another varied pattern example of the reaction vessel 100;

Fig. 15 is a diagram for describing a first problem (problem when the temperature of the reaction vessel 100 is controlled (temperature increase control or temperature decrease control);

Fig. 16A shows an example of gradual temperature decrease;

Fig. 16B shows an example of gradual temperature increase;

Fig. 17 is a graph showing a relation between a temperature change C1 of the temperature increase and an actual temperature change C2 of the reaction vessel 100 when the temperature of the reaction vessel 100 is controlled to increase to a target temperature (heating control) at a certain temperature increase rate in a reaction apparatus 10 in a reference example 2;

Fig. 18 shows an example of a flowchart of temperature increase processing for performing gradual temperature increase in the reaction apparatus 10 in the reference example 2;

Fig. 19 is a schematic configuration diagram of a reaction apparatus 10A in a first embodiment;

Fig. 20 is a block diagram of the reaction apparatus 10A according to the first embodiment;

Fig. 21 is a graph showing a relation between a desirable displacement rate C3 of a point E and an actual displacement rate C4 of the point E when the temperature of the reaction vessel 100 is controlled to decrease (cooling control);

Fig. 22 is a flowchart of an operation example 1 of the reaction apparatus 10A;

Fig. 23 is a flowchart of temperature decrease rate control processing;

Fig. 24 is a flowchart of an operation example 2 of the reaction apparatus 10A;

Fig. 25 is a graph showing a relation between a desirable displacement rate V1 of a point E and an actual displacement rate V2 of the point E when the temperature of the reaction vessel 100 is controlled to increase (heating control);

Fig. 26 is a flowchart of temperature increase rate control processing;

Fig. 27 is a block diagram of a reaction apparatus 10B according to a second embodiment;

Fig. 28 is a flowchart of an emergency processing example 1;

Fig. 29 is a flowchart of an emergency processing example 2;

Fig. 30 is a flowchart of an emergency operation example 3;

Fig. 31 is a block diagram of a reaction apparatus 10C according to a third embodiment;

Fig. 32 shows one example of a temperature control table stored in a storage unit 207;

Fig. 33 is a flowchart of an operation example 1 of the reaction apparatus 10C; and

Fig. 34 is a flowchart of an operation example 2 of the reaction apparatus 10C.

**Description of Embodiments**

Hereinafter, the present invention will be described through embodiments of the invention. However, the invention according to the scope of claims is not limited to the following embodiments. Not all the components described in the embodiments are essential as a means for solving problems. To clarify the description, the description and drawings below are suitably omitted or simplified. In the respective drawings, the same elements are given the same reference symbols, and the repeated description are omitted when appropriate.

<Reference example 1>

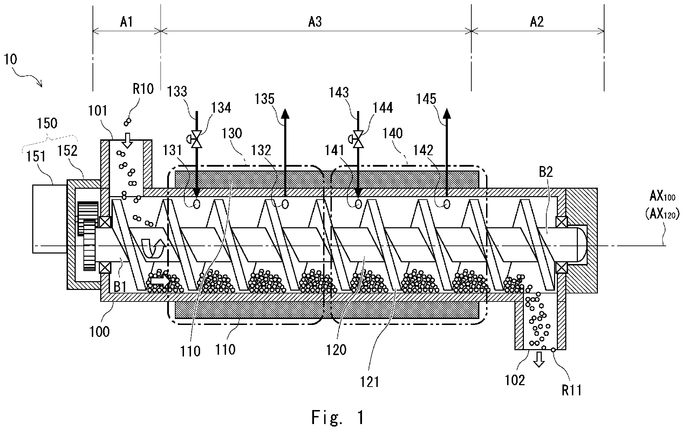

With reference to Fig. 1, main components of a reaction apparatus according to a reference example 1 will be described. Fig. 1 is a side view of a reaction apparatus 10 according to the reference example 1. Fig. 1 shows a state of the reaction apparatus 10 with a partial cut-away to facilitate understanding.

The reaction apparatus 10 is, for example, an apparatus for producing a product by applying conditions, such as predetermined physical stimulation, to a powdery and granular substance to be treated. This reaction apparatus 10 includes a cylindrical reaction vessel 100 (a reaction furnace), a supply part (a supply port 101) that supplies a substance to be treated R10 to this reaction vessel 100, a delivery part (a delivery port 102) that delivers a product from this reaction vessel 100, a conveyance mechanism 120 (e.g., a screw) that conveys the substance to be treated R10 supplied to this reaction vessel 100 from the supply part of the reaction vessel 100 to the delivery part of the reaction vessel 100, a fluid supply part (a first fluid inlet 131, a first fluid outlet 132, a first valve 134, and so on) that supplies a fluid that contacts this conveyed substance to be treated to the inside of the reaction vessel 100, and a temperature control unit (a temperature control region 110, and so on) that controls a temperature of the reaction vessel 100 for each one of different regions in a direction of a major axis $AX_{100}$ of the reaction vessel 100.

Physical stimulation is not particularly limited provided that the physical stimulation is a means used in a process of converting a substance to be treated into a product. Examples of the physical stimulation include temperature changes, such as heating and cooling. Examples of the physical stimulation include stress transmissions, such as stirring, mixing, kneading, and grinding. Physical stimulation is, for example, a reaction that receives electrons or radicals.

In the reaction apparatus 10, the substance to be treated R10 supplied to the reaction vessel 100 is heated while being conveyed by the conveyance mechanism 120 toward the delivery port of the reaction vessel 100, and a predetermined fluid that contacts this conveyed substance to be treated R10 is supplied to the inside of the reaction vessel 100, whereby the substance to be treated R10 (substance to be treated) is continuously processed at a predetermined temperature. The substance to be treated may be a solid, a fluid, or a mixture thereof. In order to enable the substance to be treated to be, for example, stirred while being conveyed, the reaction vessel 100 itself may be rotatable, or a conveyance mechanism 120 having a rotatable structure may be provided in the reaction vessel 100.

Although the kind or the state of the substance to be treated and the product is not particularly limited, the substance to be treated and the product may be an inorganic substance in which lithium is contained as one of constituents, such as a metal oxide or a metal sulfide, or may be an organic substance, such as a hydrocarbon or a food. The substance to be treated may be a solid, such as a powdery and granular material, or may be a fluid, such as a liquid or a gas.

In the process of conversion to a product, the substance to be treated may be converted to the product via an intermediate substance. The mode or the state of the intermediate substance is not particularly limited. The intermediate substance may be, for example, a product from each reaction in the case of performing two or more reactions in a stepwise manner. In such a case, the intermediate substance is, for example, an anhydride compound created by heating a hydrated compound. Alternatively, the intermediate substance may be monosaccharides produced by hydrolysis of polysaccharides. The intermediate substance may be a fired body in which at least a portion of a substance to be treated is grain grown or fired. The intermediate substance may be in a state in which at least a portion of the substance to be treated is liquefied or vaporized. The intermediate substance may be in a state in which the temperature, the hardness, or the like of the substance to be treated has changed even though there is no change in its appearance. The intermediate substance may be in a mode or a state other than the above.

The kind or the state of the product is not particularly limited, and the product may be a solid, such as a powdery and granular material, or may be a fluid, such as a liquid or a gas. Alternately, the product may be a mixture containing a material different from the substance to be treated, such as a catalyst or a conveyance auxiliary material. The product may be a mixture containing two or more compounds, such as a main product and a byproduct.

While the shape and the size of each of the substance to be treated and the product are not particularly limited, the particle diameter thereof in a case where each of the substance to be treated and the product is a powdery and granular material is preferably 50 mm or smaller, and more preferably 0.005-20 mm. In a case where the substance to be treated and the product have a lumpy shape, the ratio of the diagonal length (aspect ratio) is preferably 1-10, and more preferably 1.3-1.8.

The reaction apparatus 10 includes, as main components, a reaction vessel 100, a temperature control region 110, a conveyance mechanism 120, a first fluid control region 130, and a second fluid control region 140.

The reaction vessel 100 has, for example, a cylindrical shape, and includes a supply port 101 that receives a substance to be treated and a delivery port 102 that delivers a product. The supply port 101 is one example of a supply part of the present disclosure. Note that the shape and the configuration of the reaction vessel 100 are not particularly limited. The cross sectional shape of the reaction vessel 100 may be, for example, a circular shape or an elliptical shape, a polygonal shape such as a quadrangular shape, or another shape. For example, the reaction vessel 100 may be formed of one member, or two or more members may be coupled to each other. When two or more members are coupled to each other, fastening means such as bolts may be used at, for example, a part where these members are coupled to each other.

The reaction vessel 100 includes an intermediate part A3 between the supply port 101 and the delivery port 102. The number of supply ports 101, the number of delivery ports 102, and the number of intermediate parts A3, and the arrangement thereof are not particularly limited. For example, two or more supply ports 101 and two or more delivery ports 102 may be provided on the both respective ends of the intermediate part A3.

The supply port 101 may instead be located in the middle of the reaction vessel 100 and include an intermediate part A3 and a delivery port 102 in the both respective ends of the supply port 101. In this case, the substance to be treated R10 may be supplied to the middle of the reaction vessel 100, and the product R11 may be delivered from each of one end side and the other end side of the reaction vessel 100. Further, in this case, a screw may be used, for example, as the conveyance mechanism 120, and the orientation of a protruding part having a helical shape in the screw (orientation of the helix) may be reversed, for example, before and after the supply port 101 (with the supply port 101 as a boundary), whereby the substance to be treated R10 may be conveyed while being branched into one end side and the other end side of the reaction vessel 100 with the supply port 101 as a boundary. Otherwise, when the delivery port 102 is located in the middle of the reaction vessel 100 and the intermediate part A3 and the supply port 101 are provided in the both respective ends of the delivery port 102, a screw may be used, for example, as the conveyance mechanism 120, and the orientation of the protruding part having a helical shape in the screw (orientation of the helix) may be reversed, for example, before and after the delivery port 102 (with the delivery port 102 as a boundary), whereby the product R11 may be conveyed in such a way that the product R11 is collected from one end side and the other end side of the reaction vessel 100 with the delivery port 102 as a boundary. In this manner, means for conveying the substance to be treated R10, the product R11, and the like in such a manner that they are branched or collected is preferable, for example, in a case in which a plurality of reaction apparatuses 10 are coupled to each other in parallel.

The reaction vessel 100 is formed from a material that allows temperature changes occurring in producing a product in a furnace, and that allows contact with a substance supplied into the furnace (substance to be treated, and so on) or a substance to be produced (product, and so on). The reaction vessel 100 and the conveyance mechanism 120 may be formed from, for example, alloy, ceramic, carbon, or a composite material containing two or more of the above. An alloy is a metallic material that contains, as a constituent, at least one of alloy elements including nickel, cobalt, chromium, molybdenum, tungsten, tantalum, titanium, iron, copper, aluminum, silicon, boron, carbon, and the like. A ceramic may contain, besides a ceramic material, including an oxide, such as an alumina or a zirconia, a carbide, such as a silicon carbide or a titanium carbide, a nitride, such as a silicon nitride or a titanium nitride, or a boride, such as a chromium boride, a glass material having an amorphous structure in at least a part thereof. A carbon is a carbon material, such as crystalline graphite or fiber-reinforced graphite.

The reaction apparatus 10 shown in Fig. 1 is oriented horizontally, and includes the supply port 101 in the upper left end thereof and the delivery port 102 in the lower right end thereof in Fig. 1. The reaction vessel 100 shown in Fig. 1 receives the substance to be treated R10 from the supply port 101. The reaction apparatus 10 conveys the substance to be treated R10 received by the reaction vessel 100 from the supply port 101 (A1) of the reaction vessel 100 to the delivery port 102 (A2) of the reaction vessel 100 while passing through the intermediate part A3 by the conveyance mechanism 120 provided in the reaction vessel 100. The reaction apparatus 10 produces a product R11 from the substance to be treated R10 by causing the substance to be treated R10 to pass through the intermediate part A3 of the reaction vessel 100. Then, the reaction vessel 100 delivers the produced product R11 from the delivery port 102.

The temperature control region 110 includes a temperature control apparatus, that is, a heating apparatus or a cooling apparatus, and controls the temperature of the reaction vessel at a predetermined position in the intermediate part A3 between the supply port 101 and the delivery port 102. The temperature control region 110 and so on are examples of a temperature control unit of the present disclosure. The temperature control region 110 shown in Fig. 1 includes a heating apparatus at the intermediate part A3 of the reaction vessel 100, the heating apparatus surrounding the periphery of the reaction vessel 100 having a cylindrical shape. Examples of the heating apparatus include arbitrary heaters the temperature of which is controllable, such as a sheath heater, a coil heater, or a ceramic heater. The heating apparatus performs heating within a range from ambient temperature to approximately 1000 degrees Celsius, for example. The temperature control region 110 may include a configuration in which it surrounds the periphery of the reaction vessel 100 having a cylindrical shape by using a plurality of heating apparatuses in a divided manner in the intermediate part A3 of the reaction vessel 100. Consequently, it is possible to set different temperatures for, for example, the upper, lower, left, and right parts in the periphery of the reaction vessel 100. Further, it is also possible to further control the temperature of the intermediate part A3 for each one of different regions in a minor axis direction of the reaction vessel 100. The temperature control region 110 can further set, for each region of the intermediate part A3 of the reaction vessel 100, different temperatures along a direction of an axis $AX_{120}$ of the conveyance mechanism 120, which will be described later. The temperature control region 110 may control, for example, the temperature change applied to the substance to be treated R10 in the first fluid control region 130 and the second fluid control region 140, which will be described later.

The temperature control region 110 may also include a control apparatus for controlling the heating apparatus or the cooling apparatus. The temperature control region 110 may include, for example, a thermometer for monitoring the temperature at a predetermined position in the reaction vessel 100. In a case in which the heating apparatus has, for example, the principle in which heating is achieved by a current flow, the reaction vessel 100 may perform temperature control by monitoring current values.

The temperature control region 110 may have a configuration in which heating or cooling is achieved by circulating water, oil, or the like. The temperature control region 110 may have a configuration in which cooling is achieved by using a Peltier element or the like. With the configuration described above, the temperature control region 110 can set various temperature distributions in the reaction vessel 100 along the direction of the axis $AX_{120}$ of the conveyance mechanism 120.

As described above, the temperature control region 110 can control the temperature of the reaction vessel 100 (e.g., the intermediate part A3) for each one of different regions of the reaction vessel 100 in the direction of the major axis $AX_{100}$ of the reaction vessel 100.

The conveyance mechanism 120 extends, for example, from one end side A1 to the other end side A2 of the reaction vessel 100, and thus conveys the substance to be treated R10 supplied from the supply port 101 toward the delivery port 102. The shape and a conveyance method of the conveyance mechanism 120 according to the present disclosure are not limited provided that the conveyance mechanism 120 can convey a raw material, a product, and the like. The conveyance mechanism 120 may be a screw provided in the reaction vessel 100 in such a way as to extend from one end side to the other end side of the reaction vessel 100. The conveyance mechanism 120 may be a drum provided in the reaction vessel 100 in such a way as to extend from one end side to the other end side of the reaction vessel 100. The conveyance mechanism 120 may be a belt conveyor provided in the reaction vessel 100 in such a way as to extend from one end side to the other end side of the reaction vessel 100. The conveyance mechanism 120 may be a blowing apparatus provided in the reaction vessel 100. The conveyance mechanism 120 may be a vibration generating apparatus provided in the reaction vessel 100. The conveyance mechanism 120 may be an apparatus different from the above-mentioned apparatus.

The size of the conveyance mechanism 120 is not particularly limited, and may be, for example, shorter than the entire length of the reaction vessel 100. Although a material used for forming the conveyance mechanism 120 is not particularly limited, in the same manner as the reaction vessel 100, it is desirable to form the conveyance mechanism 120 from a material that allows temperature changes occurring in producing a product, and that allows contact with a substance supplied into the vessel (a substance to be treated, or the like) or a substance to be produced (a product, or the like). The conveyance mechanism may be formed from, for example, alloy, ceramic, carbon, or a composite material containing two or more of the above.

The conveyance mechanism 120 shown in Fig. 1 is, for example, a screw, and a protruding part 121 having a helical shape is formed on the periphery of the main axis extending in the major axis direction of the reaction vessel 100. Due to rotation and contact of this protruding part 121 with the substance to be treated R10, the conveyance mechanism 120 conveys the substance to be treated R10 from the supply port side to the delivery port side.

The shape of the protruding part 121 shown in Fig. 1 is merely an example, and the shape of the protruding part 121 is not limited to such a shape. The protruding part 121 may have different shapes for respective regions in the reaction vessel 100. More specifically, for example, the pitch of the helix of the protruding part 121 may change. The helical shape of the protruding part 121 is not necessarily a single helix, and may be a double helix or more. The protruding part 121 may include a portion not having a helical shape. Further, the protruding part 121 may be provided in a direction in which an apex of the protruding part presents an angle of 90 degrees relative to the major axis direction of the screw. The protruding part 121 may also extend in a direction that forms an angle of 0 degrees relative to the major axis direction of the screw. Consequently, the reaction apparatus 10 can set a moving speed, behavior at the time of movement, and the like of an object present in the reaction vessel 100 for respective regions. More specifically, for example, the reaction apparatus 10 conveys, stirs, mixes, retains, kneads, or grinds the object in the reaction vessel 100.

The conveyance mechanism 120 is pivotally supported at both end portions (the one end side A1, the other end side A2) of the reaction vessel 100. Further, the conveyance mechanism 120 illustrated in Fig. 1 is a screw, and is connected (coupled) to a drive apparatus 150 on one end side B1 of the reaction vessel 100. The drive apparatus 150 is one example of a drive apparatus of the conveyance mechanism 120 according to the present disclosure. The drive apparatus 150 includes a motor 151 provided on one end side of the reaction apparatus 10, and a reducer 152 provided between the motor 151 and the one end side A1 of the reaction vessel 100. This reducer 152, which includes an input shaft coupled to a rotary shaft of the motor 151 and an output shaft coupled to the one end side B1 of the conveyance mechanism 120, rotates the conveyance mechanism 120 by decelerating the rotation of the rotary shaft of the motor 151 and transmitting it to the conveyance mechanism 120. Note that the drive apparatus 150 may be set to be able to change the rotation speed of the conveyance mechanism 120. In this case, the drive apparatus 150 may be a motor in which the rotation speed is variable, or may be an apparatus obtained by combining a motor having a constant rotation speed and a reducer in which the reduction gear ratio is variable.

The first fluid control region 130 includes a first fluid inlet 131 and a first fluid outlet 132 for allowing a first fluid to pass through the reaction vessel 100 in a predetermined region in the intermediate part A3. The first fluid control region 130 is provided between the supply port 101 and the second fluid control region 140 in the reaction vessel 100. The first fluid inlet 131 connects to a first fluid supply pipe 133, and supplies the first fluid supplied from the first fluid supply pipe 133 to the reaction vessel 100. The first fluid supply pipe 133 includes a first valve 134 for adjusting the flow rate of the first fluid. Further, the first fluid supply pipe 133 may supply the first fluid to the reaction vessel 100 while intermittently controlling the time by opening or closing the first valve 134. The first fluid outlet 132 connected to a first fluid discharge pipe 135 is a hole for discharging the fluid in the first fluid control region 130 to the outside of the reaction vessel 100. The first fluid discharge pipe 135 may include a valve or a discharge mechanism for adjusting the flow rate or the flow velocity of the fluid to be discharged through the reaction vessel 100. The discharge mechanism is, for example, a suction mechanism such as a pump or an ejector using the Venturi effect. In another example, a plurality of first fluid inlets 131 and a plurality of first fluid outlets 132 may be provided. The positions where the first fluid inlet 131 and the first fluid outlet 132 are provided in the first fluid control region 130 are not particularly limited, and they may be provided in an upper part, a lower part, or a side of the reaction vessel 100. The first fluid inlet 131 may be provided in the lower part of the reaction vessel 100 and the first fluid outlet 132 may be provided in the upper part of the reaction vessel 100, so that an airflow is caused to occur in the reaction vessel in a predetermined direction. With this configuration, the first fluid can easily contact with the substance to be treated, whereby the reaction of the substance to be treated can be suitably performed. The inner diameter of the first fluid inlet 131 may be made smaller than the inner diameter of the first fluid supply pipe 133, so that the first fluid is vaporized when the first fluid is supplied to the reaction vessel 100. With this configuration, the temperature of the atmosphere around the substance to be treated can be adjusted by the vaporization heat, and thus the reaction of the substance to be treated can be suitably controlled.

With the configuration described above, the reaction apparatus 10 changes the substance to be treated R10 to an intermediate substance by causing the substance to be treated R10 to contact with the first fluid in the first fluid control region 130. Further, the reaction apparatus 10 discharges the fluid after contacting the substance to be treated R10 to the outside of the first fluid control region 130. Further, in the reaction apparatus 10, the conveyance mechanism 120 is rotated to convey the substance to be treated R10 or the intermediate substance, thus further causing it to contact the first fluid, and hence it is possible to promote reaction caused by the first fluid. The mode and the composition of the first fluid are not limited provided that the first fluid has fluidity. The first fluid may be a gas or may be a liquid. The first fluid may be a dispersion liquid in which solids are dispersed in liquids. Further, by supplying the first fluid to the reaction apparatus 10, the temperature of the reaction vessel 100 and that of the conveyance mechanism 120 can be partially controlled. Therefore, the reaction apparatus 10 can efficiently control the temperature of the substance to be treated R10, and efficiently change the substance to be treated R10 to an intermediate substance. A mechanism for adjusting the temperature and the pressure of the first fluid may be provided prior to the supply of the first fluid to the reaction vessel 100.

The second fluid control region 140 includes a second fluid inlet 141 and a second fluid outlet 142 for allowing a second fluid to pass in a region different from the first fluid control region 130 in the intermediate part A3. That is, the second fluid control region 140 may have a configuration equivalent to that of the first fluid control region 130 in a region different from the first fluid control region 130.

The second fluid control region 140 is provided between the first fluid control region 130 and the delivery port 102 in the reaction vessel 100. The second fluid inlet 141 is connected to a second fluid supply pipe 143, and supplies the second fluid supplied from the second fluid supply pipe 143 to the reaction vessel 100. The second fluid supply pipe 143 includes a second valve 144 for adjusting the flow rate of the second fluid. Further, the second fluid supply pipe 143 may supply the second fluid to the reaction vessel 100 while controlling, by opening or closing the second valve 144, the timing when the second fluid is supplied to the reaction vessel 100 in such a way that it is supplied at intermittent time intervals. The second fluid outlet 142 connected to a second fluid discharge pipe 145 is a hole for discharging the fluid in the second fluid control region 140 to the outside of the reaction vessel 100. The second fluid discharge pipe 145 may include a valve or a discharge mechanism for adjusting the flow rate or the flow velocity of the fluid discharged through the reaction vessel 100. The discharge mechanism is, for example, a suction mechanism such as a pump or an ejector. The first fluid inlet 131, the first fluid outlet 132, and the first valve 134 are examples of the fluid supply part of the present disclosure.

With the configuration described above, the reaction apparatus 10 produces the product R11 by causing the intermediate substance after passing through the first fluid control region 130 to contact with the second fluid in the second fluid control region 140. Further, the reaction apparatus 10 discharges the fluid after contacting the intermediate substance to the outside of the second fluid control region 140. The mode and the composition of the second fluid are not limited provided that the second fluid has fluidity. The second fluid may be a gas or may be a liquid. The second fluid may be a dispersion liquid in which solids are dispersed into liquids. By supplying the second fluid to the reaction apparatus 10, the temperature of the reaction vessel 100 and that of the conveyance mechanism 120 can be partially controlled. Therefore, the reaction apparatus 10 can efficiently control the temperature of the intermediate substance, and efficiently change the intermediate substance to the product R11.

While the configuration of the reaction apparatus 10 has been described above, the reaction apparatus 10 according to the reference example 1 is not limited to the above-described one. For example, the number of conveyance mechanisms 120 may be any number equal to or greater than one, and it may be two or greater. That is, the reaction apparatus 10 may include a plurality of conveyance mechanisms 120 disposed in parallel.

The cross sectional shape of the reaction vessel 100 in a plane perpendicular to the shaft of the conveyance mechanism 120 may be a shape having a combination defined by a Reuleaux constant-width figure. In this case, it is desirable that the conveyance mechanism 120 is a screw, and the cross sectional shape of the protruding part 121 of the screw may be a shape obtained by combining a plurality of arcs corresponding to a Reuleaux constant-width figure. For example, in the case in which the cross sectional shape of the inside of the reaction vessel 100 is a circular shape, the cross sectional shape of the screw may be a Reuleaux constant-width figure constituted of three arcs.

The reaction vessel 100 is not limited to be oriented horizontally parallel, and instead may have a predetermined angle with respect to a horizontal plane, and the reaction vessel 100 may have an inclined surface. While the reaction apparatus 10 includes the first fluid control region 130 and the second fluid control region 140 in the intermediate part A3, the reaction apparatus 10 may also have a configuration for allowing another fluid to pass therethrough. In other words, the reaction apparatus 10 may have three or more fluid control regions. Alternatively, the reaction apparatus 10 may include only the first fluid control region 130 in the intermediate part A3. The reaction apparatus 10 described above is controlled by a control apparatus that will be described later.

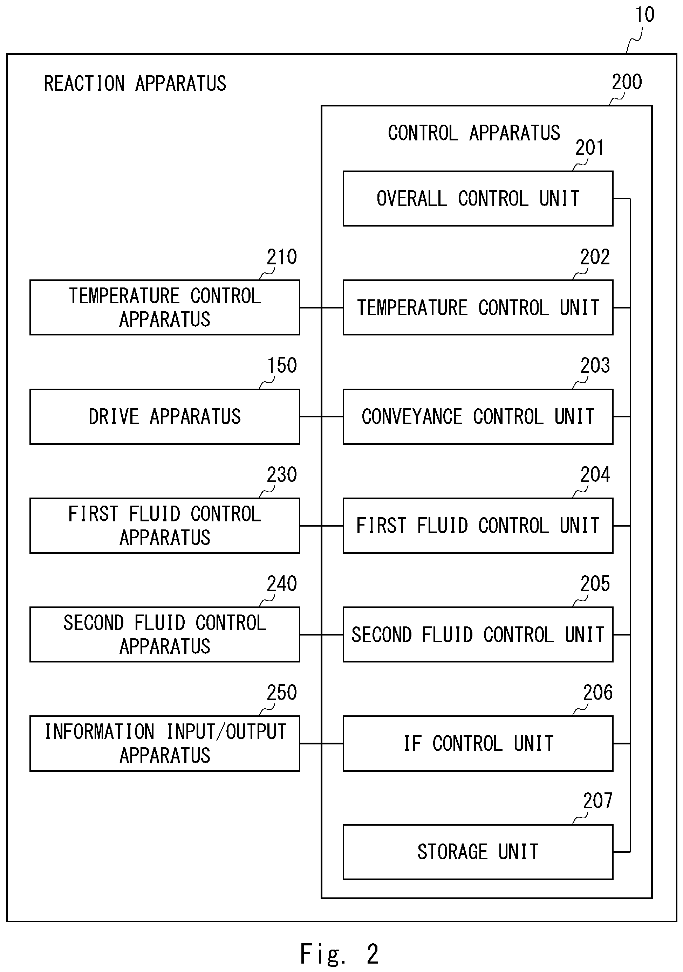

Next, with reference to Fig. 2, the function of the reaction apparatus 10 will be described. Fig. 2 is a block diagram of the reaction apparatus 10 according to the reference example 1. The reaction apparatus 10 includes, besides the components shown in Fig. 1, a control apparatus 200, a temperature control apparatus 210, a first fluid control apparatus 230, a second fluid control apparatus 240, and an information input/output apparatus 250 (information input/output unit 250).

The control apparatus 200 is a circuit board including an arithmetic unit such as a Central Processing Unit (CPU) or a Micro Controller Unit (MCU). The control apparatus 200 communicatively connects to each of the temperature control apparatus 210, the first fluid control apparatus 230, the second fluid control apparatus 240, and the information input/output unit 250, and controls their components. The control apparatus 200 achieves its functions by hardware and software mounted on a circuit board.

The control apparatus 200 includes, as main functional components, an overall control unit 201, a temperature control unit 202, a conveyance control unit 203, a first fluid control unit 204, a second fluid control unit 205, an IF control unit 206, and a storage unit 207. These functional components of the control apparatus 200 may be integrated into a single unit or may be discrete components. These functional components of the control apparatus 200 may be achieved by a plurality of separate apparatuses working together.

The overall control unit 201 is connected to each functional component of the control apparatus 200 and controls the overall operation of these functions. The overall control unit 201 may perform, for example, an operation such as giving instructions for an operation to the conveyance control unit 203 according to the state of the temperature supplied from the temperature control unit 202.

The temperature control unit 202 is connected to the temperature control apparatus 210, and controls the temperature of the reaction vessel 100 in the temperature control region 110. The temperature control unit 202 includes at least one of the heating apparatus or the cooling apparatus. The temperature control unit 202 may further include one or more thermometers for controlling a temperature.

The conveyance control unit 203 is connected to the drive apparatus 150, and controls the operation of the drive apparatus 150. The conveyance control unit 203 may include, for example, a motor drive circuit for driving a motor (motor 151) included in the drive apparatus 150. The conveyance control unit 203 may further include a rotation sensor for monitoring the rotation speed of the motor (motor 151).

The first fluid control unit 204 controls the flow of the first fluid in the first fluid control region 130. More specifically, the first fluid control unit 204 is connected to the first fluid control apparatus 230, and controls the operation of the first fluid control apparatus 230. The first fluid control apparatus 230 includes a first valve 134 for pressure-feeding the first fluid. The second fluid control unit 205 controls the flow of the second fluid in the second fluid control region 140. More specifically, the second fluid control unit 205 is connected to the second fluid control apparatus 240, and controls the operation of the second fluid control apparatus 240. The second fluid control apparatus 240 includes a second valve 144 for pressure-feeding the second fluid.

The IF control unit 206 (IF = Interface) is connected to the information input/output unit 250 and is an interface for exchanging information with a user through the information input/output unit 250. That is, the IF control unit 206 receives an operation performed by the user via the information input/output unit 250, and supplies information related to the received operation to each component of the control apparatus 200 as appropriate. Further, the IF control unit 206 controls a state of a display unit included in the information input/output unit 250.

The storage unit 207 is a storage apparatus including a nonvolatile memory such as a flash memory or a Solid State Drive (SSD). The storage unit 207 stores a program that allows the reaction apparatus 10 to achieve the functions in the present disclosure. The storage unit 207 further includes a volatile memory and temporarily stores predetermined information when the control apparatus 200 is operated. The information input/output unit 250 includes, for example, a button, a switch, a touch panel, or the like which receives an operation performed by the user. The information input/output unit 250 further includes a display device or the like that presents information to the user.

The function blocks of the reaction apparatus 10 have been described above. With the configuration described above, the reaction apparatus 10 conveys the received substance to be treated R10 by the conveyance mechanism 120, controls the temperature of the reaction vessel 100, and controls the atmosphere in the first fluid control region 130 and the second fluid control region 140.

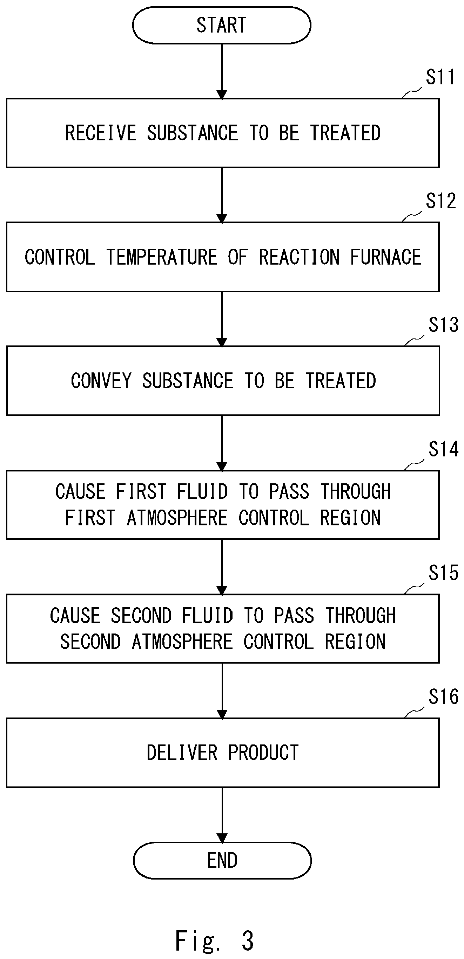

Next, with reference to Fig. 3, a method for manufacturing the product R11 performed by the reaction apparatus 10 (product manufacturing method) will be described. Fig. 3 is a flowchart of processing performed by the reaction apparatus 10. The flowchart shown in Fig. 3 starts by, for example, starting the supply of the substance to be treated R10 to the reaction apparatus 10.

First, the reaction apparatus 10 receives the predetermined substance to be treated R10 from the supply port 101 (Step S11).

Next, the control apparatus 200 of the reaction apparatus 10 controls the temperature by driving the heating apparatus or the cooling apparatus in the temperature control region 110 of the reaction vessel 100 via the temperature control unit 202 (Step S12).

Next, the control apparatus 200 of the reaction apparatus 10 drives the drive apparatus 150 via the conveyance control unit 203. The drive apparatus 150 thus drives the conveyance mechanism 120. The conveyance mechanism 120 then conveys the received substance to be treated R10 toward the delivery port 102 (Step S13).

Next, the control apparatus 200 of the reaction apparatus 10 controls, through the first fluid control unit 204, the flow of the first fluid passing through the first fluid control region 130 (first atmosphere control region) (Step S14).

Next, the control apparatus 200 of the reaction apparatus 10 controls, through the second fluid control unit 205, the flow of the second fluid passing through the second fluid control region 140 (second atmosphere control region) (Step S15).

Next, the reaction apparatus 10 delivers the product R11 that has passed through the second fluid control region 140 from the delivery port 102 (Step S16).

The reaction method performed by the reaction apparatus 10 (product manufacturing method) has been described above. The method described above is illustrated along the flow in which the reaction apparatus 10 manufactures the product R11 from the substance to be treated R10 and discharges the manufactured product R11. However, the reaction apparatus 10 may perform, for example, the temperature control in Step S12 even before Step S11. Further, for example, the reaction apparatus 10 may simultaneously start Step S14 and Step S15.

The reference example 1 has been described above. While the reaction apparatus 10 includes two fluid control regions (the first fluid control region 130 and the second fluid control region 140) in the above-described reaction apparatus 10, the reaction apparatus 10 may instead include one fluid control region or three or more fluid control regions. The reaction apparatus 10 may further include a plurality of temperature control regions 110 along the direction of the axis $AX_{120}$ of the conveyance mechanism 120 (major axis direction). The above-described reaction apparatus 10 brings a plurality of fluids into contact separately at the intermediate part A3 with the substance to be treated R10 received from the supply port 101. The reaction apparatus 10 further controls the temperature of the reaction vessel 100 along the direction of the axis $AX_{120}$ of the conveyance mechanism 120 (major axis direction) in the intermediate part A3. The reaction apparatus 10 can further convey objects inside the reaction vessel 100 and provide physical stimulation. The reaction apparatus 10 can simultaneously and accurately perform the atmosphere control, temperature control, and physical control described above. Therefore, according to the reference example 1, it is possible to provide a reaction apparatus and so on for efficiently manufacturing a desired product.

<Reference Example 2>

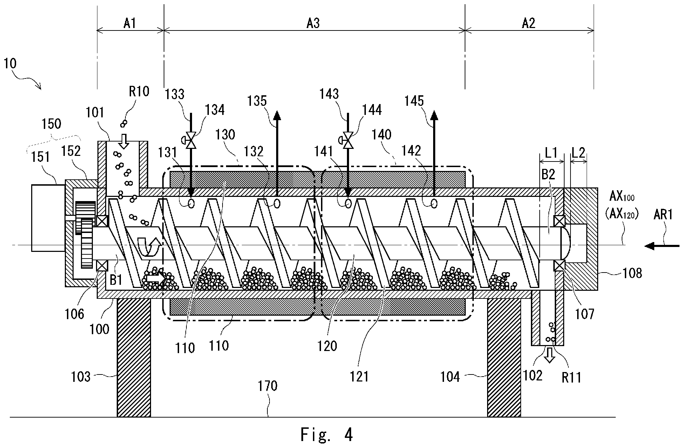

Next, as a reference example 2, with reference to Fig. 4, a configuration example in which a reaction vessel 100 is supported and a configuration example in which a conveyance mechanism 120 is supported will be described. This configuration example can be applied to the above-described reference example 2. Fig. 4 is a side view of a reaction apparatus according to the reference example 2. Fig. 4 corresponds to a diagram in which a first support part 103 and a second support part 104 are added to the components shown in Fig. 1. The other configurations are similar to those of Fig. 1. Hereinafter, differences between the reference example 1 and the reference example 2 will be mainly described.

EP 4 782 099 A1

<Configuration Example for supporting Reaction Vessel 100>

As shown in Fig. 4, the reaction apparatus 10 includes a first support part 103 and a second support part 104 as components that support the reaction vessel 100. The reaction vessel 100 shown in Fig. 4, which is a cylindrical reaction vessel (furnace) including an intermediate part A3 which is between one end side A1 and the other end side A2, is supported by the first support part 103 and the second support part 104 provided on a floor surface 170. The floor surface 170 may be a floor surface of a building where the reaction apparatus 10 is installed, or may be, for example, a part of surfaces of a structure forming the reaction apparatus 10, like an upper surface of a mounting base.

The first support part 103, which is disposed on the floor surface 170 located below the one end side A1 of the reaction vessel 100, supports the one end side A1 of the reaction vessel 100 from below. Specifically, the first support part 103 supports the one end side A1 of the reaction vessel 100 in a state in which it is immovable in a direction of a major axis $AX_{100}$ of the reaction vessel 100. This is achieved, for example, by fixing the one end side A1 of the reaction vessel 100 supported by the first support part 103 to the first support part 103 by direct fixing means such as bolts or welding. Alternatively, in place of the direct fixing means, it may be achieved, for example, by causing a member such as a plate or a wire separately fixed to a mounting base or the like to contact with the one end side A1 of the reaction vessel 100 supported by the first support part 103 and then indirectly fixing the one end side A1 of the reaction vessel 100 to the first support part 103.

On the other hand, the second support part 104, which is provided on the floor surface 170 located below the other end side A2 of the reaction vessel 100, supports the other end side A2 of the reaction vessel 100 from below. Specifically, the second support part 104 supports the other end side A2 of the reaction vessel 100 in a state in which it is movable in the direction of the major axis $AX_{100}$ of the reaction vessel 100. This is achieved, for example, by specific examples 1-3 that will be described later.

The technical meaning of supporting the other end side A2 of the reaction vessel 100 in a state in which it is movable in the direction of the major axis $AX_{100}$ of the reaction vessel 100 is as follows.

That is, when the temperature of the reaction vessel 100 is controlled by the temperature control apparatus 210 and so on (e.g., when the reaction vessel 100 is heated from the ambient temperature to about 900 degrees), as described in the above reference example 1, the reaction vessel 100 is thermally expanded in the direction of the major axis $AX_{100}$ (e.g., thermally expanded in the direction of the major axis $AX_{100}$ by about 10-20 mm). At this time, if the other end side A2 of the reaction vessel 100 is immovable in the direction of the major axis $AX_{100}$, a force acts on the drive apparatus 150 as the reaction vessel 100 is thermally expanded in the direction of the major axis $AX_{100}$, which may cause the drive apparatus 150 to be damaged. It is possible, for example, that a rotary shaft of (one or more) gear forming the drive apparatus 150 (e.g., reducer) may be deformed and thus the drive apparatus 150 (e.g., reducer) cannot normally operate. Otherwise, it is possible that the conveyance mechanism 120 may be greatly deformed, which prevents the conveyance mechanism 120 from performing normal conveyance.

In order to prevent the situation in which a force is acted on the drive apparatus 150 as the reaction vessel 100 is thermally expanded in the direction of the major axis $AX_{100}$ and the drive apparatus 150 is, for example, damaged, the second support part 104 supports the other end side A2 of the reaction vessel 100 in a state in which it is movable in the direction of the major axis $AX_{100}$ of the reaction vessel 100.

Next, specific examples in which the other end side A2 of the reaction vessel 100 is supported in a state in which it is movable in the direction of the major axis $AX_{100}$ of the reaction vessel 100 will be described.

<Specific Example 1>

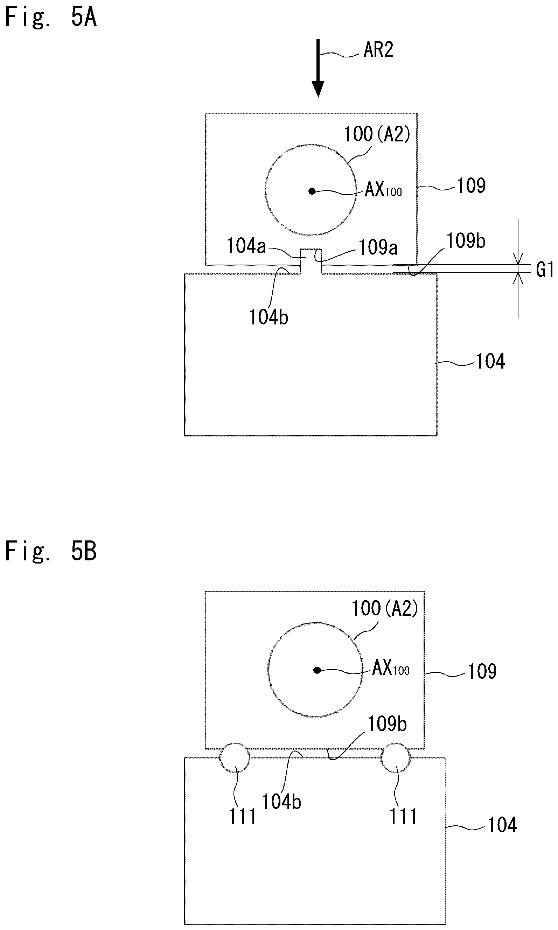

Fig. 5A is a diagram showing a specific example 1 in which the other end side A2 of the reaction vessel 100 is supported in a state in which it is movable in the direction of the major axis $AX_{100}$ of the reaction vessel 100. Fig. 5A is an arrow view as seen from a direction of an arrow AR1 in Fig. 4.

As shown in Fig. 5A, the specific example 1 is an example in which, in order to cause the other end side A2 of the reaction vessel 100 to be movable in the direction of the major axis $AX_{100}$ of the reaction vessel 100, the other end side A2 of the reaction vessel 100 is supported in a state in which a flange part 109 is provided on the other end side A2 of the reaction vessel 100, a recessed part 109a is formed in a lower part of the flange part 109, a protruding part 104a to be inserted into the recessed part 109a is provided in an upper part of the second support part 104, and the protruding part 104a is inserted into the recessed part 109a. The recessed part 109a and the protruding part 104a extend in the direction of the major axis $AX_{100}$ of the reaction vessel 100. A gap G1 is formed between a lower surface 109b of the flange part 109 and an upper surface 104b of the second support part 104. A lubricating oil or the like may be supplied to a part between the recessed part 109a and the protruding part 104a. In contrast, the protruding part 104a may be provided in the lower part of the flange part 109, and the recessed part 109a into which the protruding part 104a is inserted may be formed in the upper part of the second support part 104.

<Specific Example 2>

Fig. 5B is a diagram showing a specific example 2 in which the other end side A2 of the reaction vessel 100 is supported in a state in which it is movable in the direction of the major axis $AX_{100}$ of the reaction vessel 100. Fig. 5B is an arrow view seen from the direction of the arrow AR1 in Fig. 4.

As shown in Fig. 5B, the specific example 2 is an example in which, in order to cause the other end side A2 of the reaction vessel 100 to be movable in the direction of the major axis $AX_{100}$ of the reaction vessel 100, the other end side A2 of the reaction vessel 100 is supported in a state in which a flange part 109 is provided on the other end side A2 of the reaction vessel 100, a friction reducing member 111 is provided on an upper surface 104b of the second support part 104, and a lower surface 109b of the flange part 109 contacts the friction reducing member 111. The mode, the shape, and the material of the friction reducing member 111 are not particularly limited as long as the friction reducing member 111 is a member capable of smoothly moving the reaction vessel 100. The friction reducing member 111 may be, for example, a member including a rotation unit, such as a roller or a belt. The friction reducing member 111 may be a member made of a high hardness material in which Vickers hardness (HV) of the surface of the friction reducing member 111 supporting the reaction vessel 100 is 450 or greater or Rockwell hardness (HRC) thereof is 45 or greater, such as a tool steel material capable of being subjected to quenching heat treatment, a nitrided steel material capable of being subjected to nitriding heat treatment, a powder metallurgical material containing ceramic particles in at least a part of the friction reducing member 111, or a steel with a coating on its surface. The friction reducing member 111 may be, for example, a member whose surface is coated with diamond-like carbon (DLC), titanium carbide (TiC), titanium carbonitride (TiBN), titanium boride ($TiB_2$), vanadium carbide (VC), alumina ($Al_2O_3$), zirconia ($ZrO_2$) or the like by means of film forming means such as CVD, PVD, or thermal spraying. The friction reducing member 111 may be a member whose surface is coated with chrome plating or nickel plating (Ni-P or Ni-Co-W) by electroplating or non-electrolytic plating. The friction reducing member 111 may further be a member whose surface is coated with a component having solid lubricating properties, such as molybdenum disulfide, by application means such as spraying. That is, the chemical composition of the surface of the friction reducing member 111 supporting the reaction vessel 100 (supporting surface) preferably contains at least one of elements (chemical elements) of B, C, N, Al, P, Ti, V, Cr, Co, Ni, Mo, and W.

<Specific Example 3>

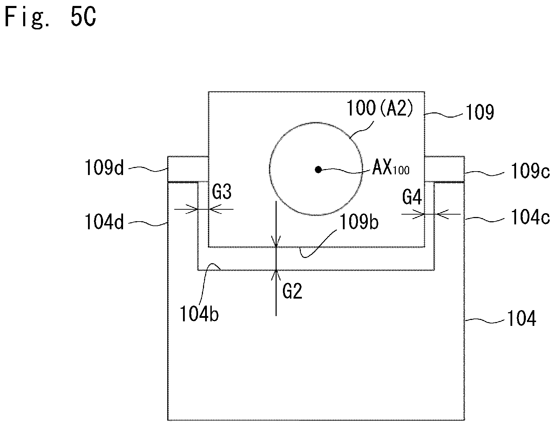

Fig. 5C is a diagram showing a specific example 3 in which the other end side A2 of the reaction vessel 100 is supported in a state in which it is movable in the direction of the major axis $AX_{100}$ of the reaction vessel 100. Fig. 5C is an arrow view as seen from the direction of the arrow AR1 in Fig. 4.

As shown in Fig. 5C, the specific example 3 is an example in which, in order to cause the other end side A2 of the reaction vessel 100 to be movable in the direction of the major axis $AX_{100}$ of the reaction vessel 100, the other end side A2 of the reaction vessel 100 is supported in a state in which a flange part 109 including projection parts 109c and 109d projecting on both right and left sides (projecting in a direction that intersects (e.g., perpendicular to) the major axis of the reaction vessel 100) is provided in the other end side A2 of the reaction vessel 100, standing parts 104c and 104d are provided on an upper surface 104b of the second support part 104, and the projection parts 109c and 109d are placed on the standing parts 104c and 104d. A gap G2 is formed between a lower surface 109b of the flange part 109 and the upper surface 104b of the second support part 104, and gaps G3 and G4 are formed between the both right and left sides of the flange part 109 and the standing parts 104c and 104d. A lubricating oil or the like may be supplied between the projection parts 109c and 109d and the standing parts 104c and 104d.

Like in the above specific examples 1-3, the other end side A2 of the reaction vessel 100 is supported in a state in which it is movable in the direction of the major axis $AX_{100}$ of the reaction vessel 100, whereby it is possible to prevent a situation in which a force is acted on the drive apparatus 150 as the reaction vessel 100 is thermally expanded (or thermally contracted) in the direction of the major axis $AX_{100}$, and the drive apparatus 150 is, for example, damaged.

<Configuration Example in which Conveyance Mechanism 120 is supported>

As shown in Fig. 4, the reaction apparatus 10 includes, as a configuration for supporting the screw as the conveyance mechanism 120, shaft bearings 106 and 107.

The shaft bearing 106, which is provided on the one end side A1 of the reaction vessel 100, supports a one end side B1 of the conveyance mechanism 120 in a rotatable manner. The shaft bearing 106 is, for example, a bearing or a bush. The one end side B1 of the conveyance mechanism 120 is coupled to (fixed to) an output shaft of a reducer 152. That is, the one end side B1 of the conveyance mechanism 120 is supported in a rotatable manner and in a state in which it is immovable in the direction of the axis $AX_{120}$ of the conveyance mechanism 120.

On the other hand, the shaft bearing 107 is provided on the other end side A2 of the reaction vessel 100, and supports the other end side B2 of the conveyance mechanism 120 in a rotatable manner and in a state in which it is movable in the direction of the axis $AX_{120}$ of the conveyance mechanism 120. The shaft bearing 107 is one example of a third support part and a sixth support part of the present disclosure. The shaft bearing 107 is, for example, a bearing or a bush. In order to cause the other end side B2 of the conveyance mechanism 120 to be movable in the direction of the axis $AX_{120}$ of the conveyance mechanism 120, a protruding part 121 having a helical shape is not provided in a predetermined range of the other end side B2 of the conveyance mechanism 120 (see a range shown by a symbol L1 in Fig. 4). Further, a space which the other end side B2 of the conveyance mechanism 120 moving in the direction of the axis $AX_{120}$ of the conveyance mechanism 120 (right side of Fig. 4) enters (see a range shown by a symbol L2 in Fig. 4) is provided between an end part of the other end side B2 of the conveyance mechanism 120 and a lid part 108 provided on the other end side A2 of the reaction vessel 100.

The axis $AX_{120}$ of the conveyance mechanism 120 supported as described above and the major axis $AX_{100}$ of the reaction vessel 100 match (substantially match) each other.

The technical meaning of supporting the other end side B2 of the conveyance mechanism 120 in a state in which it is movable in the direction of the axis $AX_{120}$ of the conveyance mechanism 120 is as follows.

That is, when the temperature of the reaction vessel 100 is controlled by the temperature control apparatus 210 and so on (e.g., when the reaction vessel 100 is heated from the ambient temperature to about 900 degrees Celsius), as described in the above reference example 1, the reaction vessel 100 is thermally expanded in the direction of the major axis $AX_{100}$ (e.g., expanded in the direction of the major axis $AX_{100}$ by about 10-20 mm). Along with this, the conveyance mechanism 120 is also thermally expanded in the direction of the axis $AX_{120}$ thereof (e.g., thermally expanded in the direction of the axis $AX_{120}$ by about 10-20 mm). At this time, if the other end side B2 of the conveyance mechanism 120 is immovable in the direction of the axis $AX_{120}$, it is possible that the conveyance mechanism 120 may be deformed due to thermal expansion of the conveyance mechanism 120 in the direction of the axis $AX_{120}$, which causes the protruding part 121 having a helical shape or the like of the deformed conveyance mechanism 120 to contact with an inner wall of the reaction vessel 100, whereby the conveyance mechanism 120 cannot be, for example, normally rotated.

Further, if the one end side B1 of the conveyance mechanism 120 is configured to be movable in the direction of the axis $AX_{120}$ of the conveyance mechanism 120 and the other end side B2 of the conveyance mechanism 120 is configured to be immovable in the direction of the axis $AX_{120}$ of the conveyance mechanism 120, the other end side B2 of the conveyance mechanism 120 moves in accordance with thermal expansion or thermal contraction of the reaction vessel 100, whereby it may become difficult to control the positions of the protruding part and the recessed part of the screw and the substance to be treated cannot be, for example, normally reacted.

In order to prevent the conveyance mechanism 120 from being deformed due to thermal expansion of the conveyance mechanism 120 in the direction of the axis $AX_{120}$, the other end side B2 of the conveyance mechanism 120 is supported by the shaft bearing 107 in a rotatable manner and in a state in which it is movable in the direction of the axis $AX_{120}$ of the conveyance mechanism 120.

As described above, by supporting the other end side B2 of the conveyance mechanism 120 in a rotatable manner and in a state in which it is movable in the direction of the axis $AX_{120}$ of the conveyance mechanism 120, it is possible to prevent the conveyance mechanism 120 from being deformed due to thermal expansion of the conveyance mechanism 120 in the direction of the axis $AX_{120}$ thereof.

As described above, according to the reference example 2, it is possible to provide the reaction apparatus 10 capable of preventing, even when the reaction vessel 100 is thermally expanded in the direction of the major axis $AX_{100}$, a situation in which the reaction vessel 100 cannot normally operate due to thermal expansion.

Next, a modified example will be described.

While the example in which the reaction vessel 100 supported in a non-rotatable manner is used has been described in the above-described reference example 2, this is merely an example. For example, a reaction vessel 100 that is rotatably supported may instead be used.

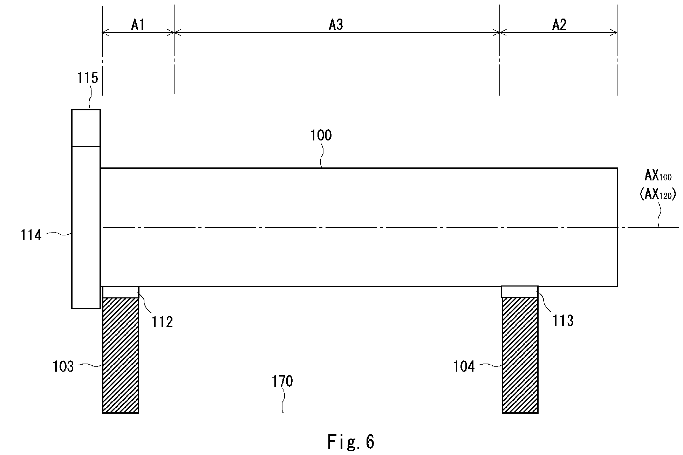

Fig. 6 is a configuration example in which the reaction vessel 100 is supported in a rotatable manner.

As shown in Fig. 6, a reaction apparatus 10 according to this modified example includes, as a component for supporting the reaction vessel 100 in a rotatable manner, shaft bearings 112 and 113.

The shaft bearing 112, which is provided between one end side A1 of the reaction vessel 100 and a first support part 103, supports the one end side A1 of the reaction vessel 100 in a rotatable manner and in a state in which it is immovable in the direction of the major axis $AX_{100}$ of the reaction vessel 100. The shaft bearing 112 is, for example, a bearing or a bush. A flange part 114 is provided on the one end side A1 of the reaction vessel 100. This flange part 114 contacts the shaft bearing 112, which prevents the one end side A1 of the reaction vessel 100 from moving in the direction of the major axis $AX_{100}$ of the reaction vessel 100 (right side in Fig. 6). A plurality of flange parts 114 and a plurality of shaft bearings 112 may be provided. For example, by providing two shaft bearings 112 for one flange part 114 and sandwiching the flange part 114 by these shaft bearings 112, it is possible to prevent the one end side A1 of the reaction vessel 100 from moving in the direction of the major axis $AX_{100}$ of the reaction vessel 100 more preferably. The shaft bearing 112 may be a ring-shaped bearing or bush into which the one end side A1 of the reaction vessel 100 is inserted, or may be an arc-shaped bearing or bush in which a part of a ring-shaped bearing or bush is cut out. In place of the shaft bearing 112, a member made of a lubricating material may be used to support the one end side A1 of the reaction vessel 100 in a rotatable manner and in a state in which it is immovable in the direction of the major axis $AX_{100}$ of the reaction vessel 100. The shaft bearing 112 and the flange part 114 are examples of a fourth support part of the present disclosure.

On the other hand, the shaft bearing 113, which is provided between the other end side A2 of the reaction vessel 100 and a second support part 104, supports the other end side A2 of the reaction vessel 100 in a rotatable manner and in a state in which it is movable in the direction of the major axis $AX_{100}$ of the reaction vessel 100. The shaft bearing 113 is, for example, a bearing or a bush. The shaft bearing 113 may be a ring-shaped bearing or bush into which the other end side A2 of the reaction vessel 100 is inserted, or may be an arc-shaped bearing or bush in which a part of the ring-shaped bearing or bush is cut out. In place of the shaft bearing 113, a member made of a lubricating material may be used to support the other end side A2 of the reaction vessel 100 in a rotatable manner and in a state in which it is movable in the direction of the major axis $AX_{100}$ of the reaction vessel 100. The shaft bearing 113 is one example of a fifth support part of the present disclosure. The reaction vessel 100 that is rotatably supported according to this modified example is connected to (coupled to) a reaction vessel drive apparatus 116 (not shown in Fig. 6) similar to the drive apparatus 150 (screw drive apparatus) on the one end side A1.

In a case where the configuration in which the reaction vessel 100 is supported in a rotatable manner is used as in the modified example, the conveyance mechanism 120 that is rotatably supported (see Fig. 4) may be used, or a conveyance mechanism 120 (not shown) supported in a non-rotatable manner may be used in place of the conveyance mechanism 120 that is rotatably supported. Further, the conveyance mechanism 120 may be omitted.

Further, while the example in which the first support part 103 that supports the one end side A1 of the reaction vessel 100 from below is used as the first support part has been described above in the above-described reference example 2, this is merely an example. That is, the first support part may have any configuration as long as it supports the one end side A1 of the reaction vessel 100 in a state in which it is immovable in the direction of the major axis $AX_{100}$. For example, while not shown in the drawings, a first support part that supports the one end side A1 of the reaction vessel 100 in a form in which the first support part suspends the one end side A1 of the reaction vessel 100 from the top may be used as the first support part, or a first support part that supports the one end side A1 of the reaction vessel 100 from a side may be used.

Further, while the example in which a support part that supports the other end side A2 of the reaction vessel 100 from the bottom is used as the second support part 104 has been described in the above-described reference example 2, this is merely an example. That is, the second support part may have any configuration as long as it supports the other end side A2 of the reaction vessel 100 in a state that it is movable in the direction of the major axis $AX_{100}$. For example, while not shown in the drawings, a second support part that supports the other end side A2 of the reaction vessel 100 in a form in which the second support part suspends the other end side A2 of the reaction vessel 100 from the top may be used as the second support part, or a second support part that supports the other end side A2 of the reaction vessel 100 from a side may be used.

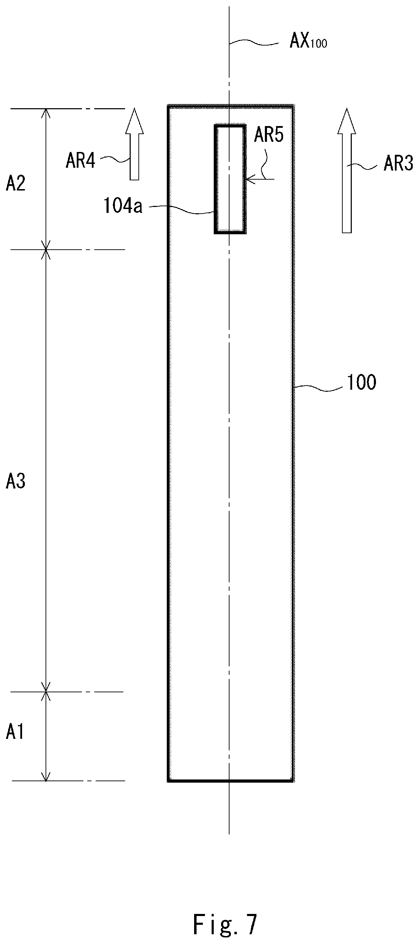

While the example in which the second support part 104 supports the other end side A2 of the reaction vessel 100 in a state in which it is movable only in the direction of the major axis $AX_{100}$ of the reaction vessel 100 has been described in the above-described reference examples, as shown in Fig. 5A and 7, this is merely an example. Fig. 7 is an arrow view as seen from the direction of an arrow AR2 in Fig. 5A. For example, the other end side A2 of the reaction vessel 100 may be supported in a state in which it is rotatable about a rotation axis $AX_V$ (vertical axis), in addition to being movable in the direction of the major axis $AX_{100}$ of the reaction vessel 100.

Next, a specific example 4 in which the other end side A2 of the reaction vessel 100 is supported in a state in which it is rotatable about the rotation axis $AX_V$ (vertical axis), in addition to being movable in the direction of the major axis $AX_{100}$ of the reaction vessel 100 will be described.

<Specific Example 4>

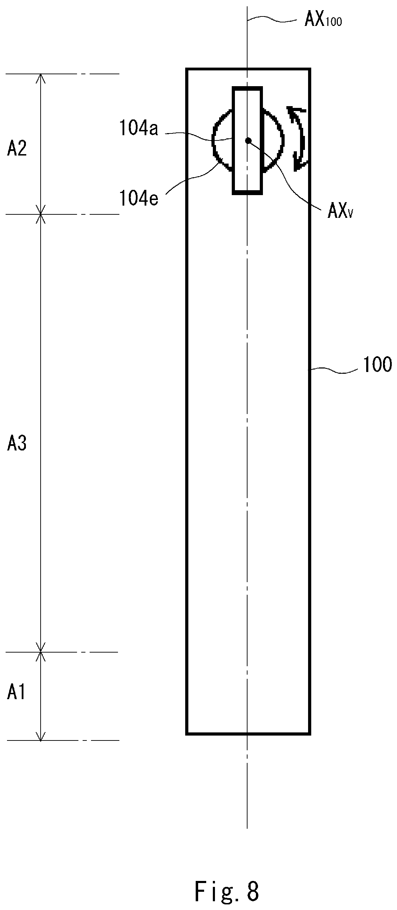

Fig. 8 is a schematic view of a specific example 4 in which the other end side A2 of the reaction vessel 100 is supported in a state in which it is rotatable about the rotation axis $AX_V$ (vertical axis), in addition to being movable in the direction of the major axis $AX_{100}$ of the reaction vessel 100.

As shown in Fig. 8, a protruding part 104a is provided on a pedestal 104e supported by a second support part 104 (an upper surface 104b) so as to be rotatable about the rotation axis $AX_V$ (vertical axis) via a bearing or the like. Note that, in Fig. 8, the rotation axis $AX_V$ extends in a direction perpendicular to the paper surface. Accordingly, the other end side A2 of the reaction vessel 100 is supported in a state in which it is rotatable about the rotation axis $AX_V$ (vertical axis), in addition to being movable in the direction of the major axis $AX_{100}$ of the reaction vessel 100.

As described above, an advantage of supporting the other end side A2 of the reaction vessel 100 in a state in which it is rotatable about the rotation axis $AX_V$ (vertical axis), in addition to being movable in the direction of the major axis $AX_{100}$ of the reaction vessel 100, is as follows.

That is, depending on the state of the reaction (state of the physical stimulation), it is possible that there is a difference between the temperature on the right side of the major axis $AX_{100}$ of the reaction vessel 100 and the temperature on the left side thereof (or this difference in temperature may be purposely caused) in Fig. 7. In this case, a phenomenon that an amount of extension on the right side of the major axis $AX_{100}$ of the reaction vessel 100 and an amount of extension on the left side thereof differ from each other occurs.

When, for example, the temperature on the right side of the major axis $AX_{100}$ of the reaction vessel 100 is higher and the temperature on the left side thereof is lower in Fig. 7, the right side of the major axis $AX_{100}$ of the reaction vessel 100 extends to be longer and the left side thereof extends to be shorter. The lengths of the arrows AR3 and AR4 in Fig. 7 indicate this situation.

When the amount of extension on the right side of the major axis $AX_{100}$ of the reaction vessel 100 and the amount of extension on the left side thereof differ from each other, as described above, it is possible that a stress in the horizontal direction (see an arrow AR5 in Fig. 7) may occur on the other end side A2 of the reaction vessel 100.

When the above stress has occurred, a friction that occurs between the second support part 104 (the protruding part 104a) and the flange part 109 (the recessed part 109a) may prevent the reaction vessel 100 (the other end side A2) from moving in the direction of the major axis $AX_{100}$.

By employing the configuration shown in Fig. 8, it becomes possible to suitably deal with various situations of physical stimulations.

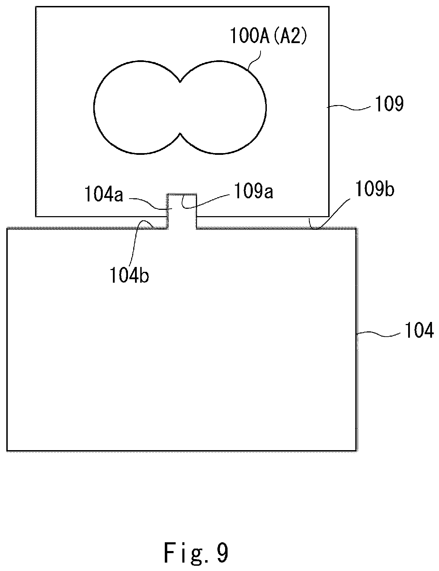

The state in which the difference between the temperature on the right side of the reaction vessel 100 and the temperature on the left side thereof is purposely caused is particularly effective in terms of controlling, for example, a reaction rate of a substance to be treated when a biaxial reaction vessel 100A (see Fig. 9) is employed. Fig. 9 is an example of the biaxial reaction vessel 100A.

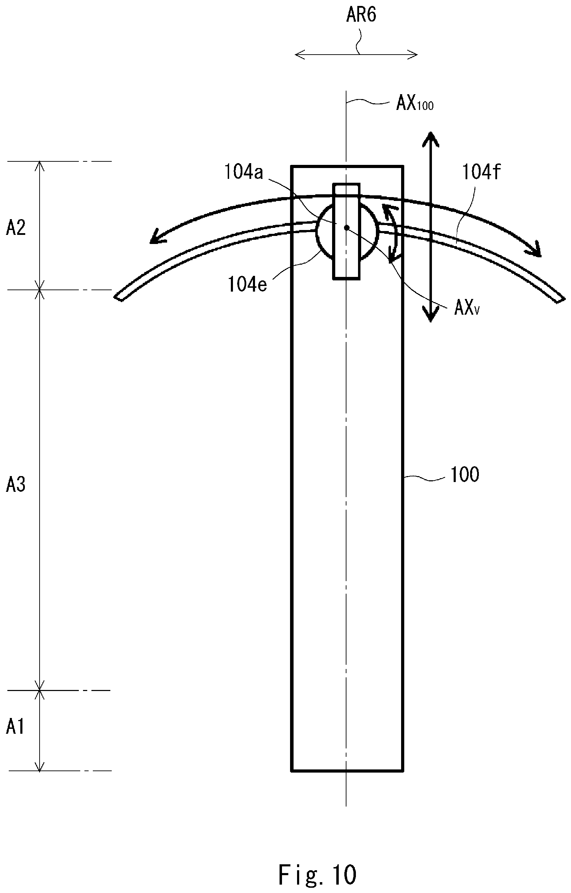

Next, a specific example 5 in which the other end side A2 of the reaction vessel 100 is supported in such a way that it is movable in a minor axis direction (see an arrow AR6 in Fig. 10), in addition to being movable in the direction of the major axis $AX_{100}$ of the reaction vessel 100, will be described.

<Specific Example 5>

Fig. 10 is a schematic view of a specific example 5 in which the other end side A2 of a reaction vessel 100 is supported in a state in which it is movable in the minor axis direction (see the arrow AR6 in Fig. 10), in addition to being movable in the direction of the major axis $AX_{100}$ of the reaction vessel 100.

As shown in Fig. 10, a protruding part 104a is provided on a pedestal 104e supported by a second support part 104 (an upper surface 104b) so as to be rotatable about the rotation axis $AX_V$ (vertical axis) via a bearing or the like. This pedestal 104e is further provided in a guide rail 104f (supported by the second support part 104 (the upper surface 104b)) in such a way that it is further movable in the minor axis direction (see the arrow AR6 in Fig. 10). Note that the rotation axis $AX_V$ extends in a direction perpendicular to the paper surface in Fig. 10. Therefore, the other end side A2 of the reaction vessel 100 is supported in a state in which it is rotatable about the rotation axis $AX_V$ (vertical axis) and is movable in the minor axis direction (see the arrow AR6 in Fig. 10), in addition to being movable in the direction of the major axis $AX_{100}$ of the reaction vessel 100.

As described above, an advantage of supporting the other end side A2 of the reaction vessel 100 in a state in which it is rotatable about the rotation axis $AX_V$ (vertical axis) and is movable in the minor axis direction (see the arrow AR6 in Fig. 10), in addition to being movable in the direction of the major axis $AX_{100}$ of the reaction vessel 100, is as follows.

In a case where the above stress (see the arrow AR5 in Fig. 7) has occurred, a friction that occurs between the second support part 104 (the protruding part 104a) and the flange part 109 (the recessed part 109a) may inhibit the movement of the reaction vessel 100 (the other end side A2) in the direction of the major axis $AX_{100}$.

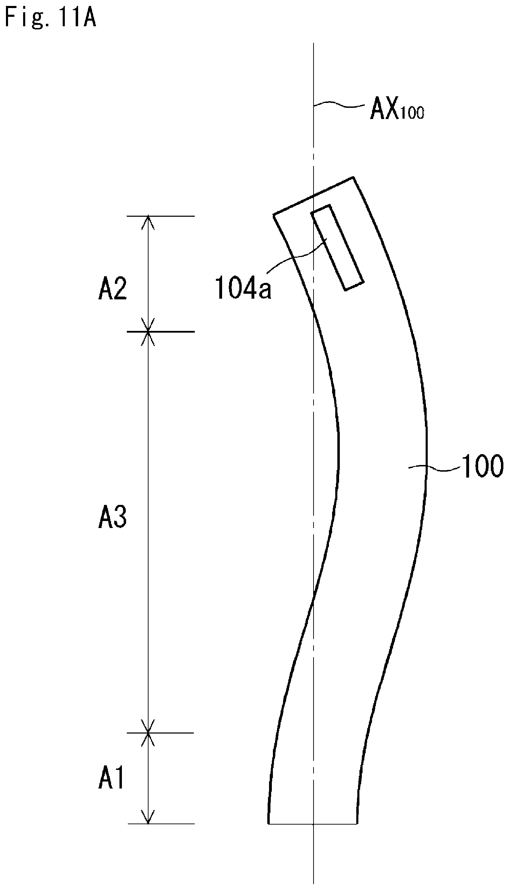

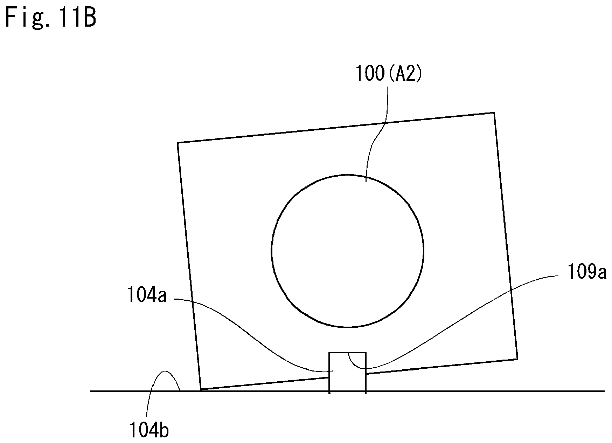

When the above deformation further increases (when the above stress further increases), the other end side A2 of the reaction vessel 100 may be inclined (see Fig. 11B) and the reaction vessel 100 may be twisted (see Fig. 11A). Fig. 11A is a diagram showing a state in which the reaction vessel 100 is twisted, and Fig. 11B is a diagram showing a state in which the reaction vessel 100 is inclined. These twisting and inclination tend to occur on the other end side A2 or in the intermediate part A3.

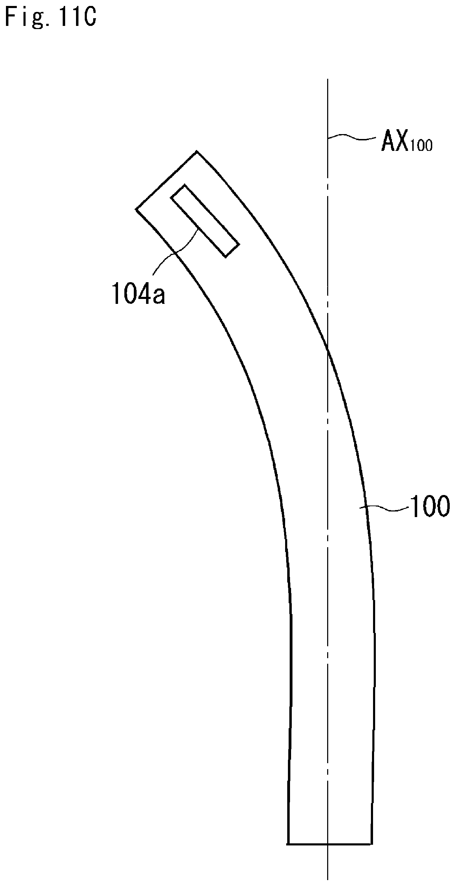

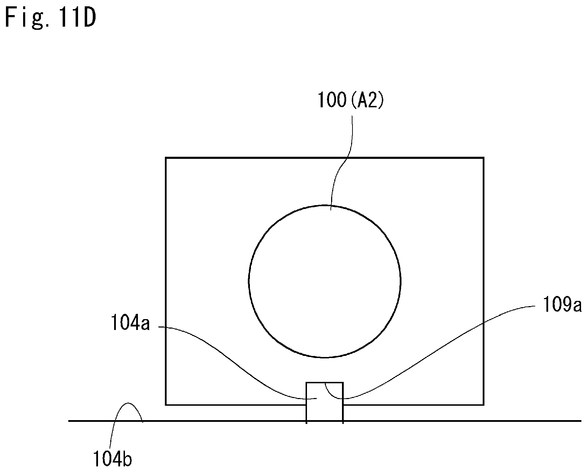

In order to solve the aforementioned problem, by employing the configuration shown in Fig. 10, it becomes possible to suppress twisting of the reaction vessel 100 (see Figs. 11C and 11D). Fig. 11C is a diagram showing a state in which the twisting of the reaction vessel 100 is reduced, and Fig. 11D is a diagram showing a state in which the inclination of the reaction vessel 100 is reduced.

Further, while the example in which the temperature control unit (the temperature control region 110, and so on) controls the temperature of the reaction vessel 100 for each one of different regions in the direction of the major axis $AX_{100}$ of the reaction vessel 100 has been described in the above-described reference examples 1 and 2, this is merely an example. That is, the number of regions where the temperature control unit (the temperature control region 110, and so on) controls the temperature is not limited to two or greater, and may be one.

Further, while the example in which the fluid supply part (the first fluid inlet 131, the first fluid outlet 132, the first valve 134, and so on) is used has been described in the above-described reference examples 1 and 2, this is merely an example. That is, a part or all of the fluid supply part (the first fluid inlet 131, the first fluid outlet 132, the first valve 134, and so on) may be omitted.

Further, while the example in which the drive apparatus 150 which is provided on the one end side A1 of the reaction vessel 100 and to which one end side B1 of the conveyance mechanism 120 (e.g., screw) is coupled has been described in the above-described reference examples 1 and 2, this is merely an example. Another drive apparatus may be used as an apparatus for driving the conveyance mechanism 120.

<Embodiments>

<Specific Example of Temperature Control Region 110 >

First, specific examples of a temperature control region 110 that is commonly used in reaction apparatuses 10A, 10B, and 10C according to first to third embodiments described later will be described.

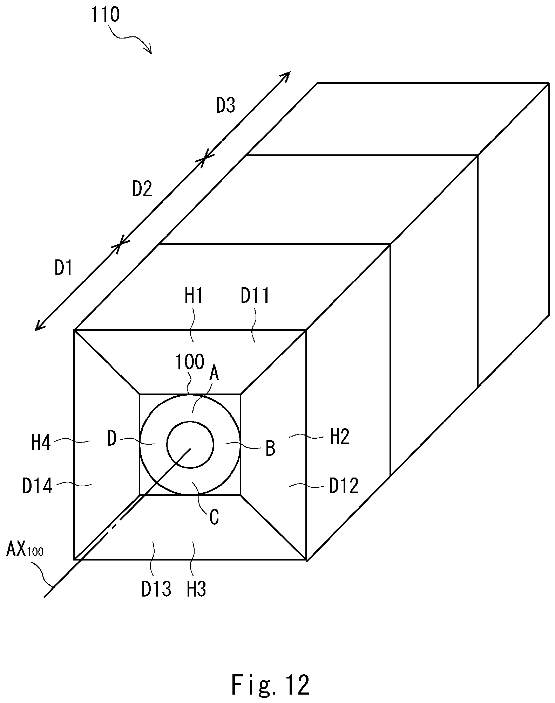

Fig. 12 is a perspective view of the temperature control region 110.

As shown in Fig. 12, the temperature control region 110 is divided into a total of three zones D1-D3 in a direction of a major axis $AX_{100}$ of a reaction vessel 100. The temperature control region 110 is not limited to being divided into three zones and may instead be divided into 1, 2, 4 or more zones.

The zone D1 is divided into a total of four zones D11-D14 (i.e., the upper, lower, left, and right parts) around the major axis $AX_{100}$ (circumferential direction) of the reaction vessel 100 so as to surround the reaction vessel 100. The zone D1 is not limited to being divided into four zones but may be divided into 1-3 or 5 zones. The same holds true for the zones D2 and D3.

Then, a first heating unit H1, a second heating unit H2, a third heating unit H3, and a fourth heating unit H4 are respectively disposed in the four zones D11-D14. In this manner, the heating units H1-H4 are disposed around the major axis $AX_{100}$ of the reaction vessel 100 so as to surround the reaction vessel 100.

It is desirable that the heating units H1-H4 be heaters (electric heaters) including heating wires in consideration of temperature control properties.

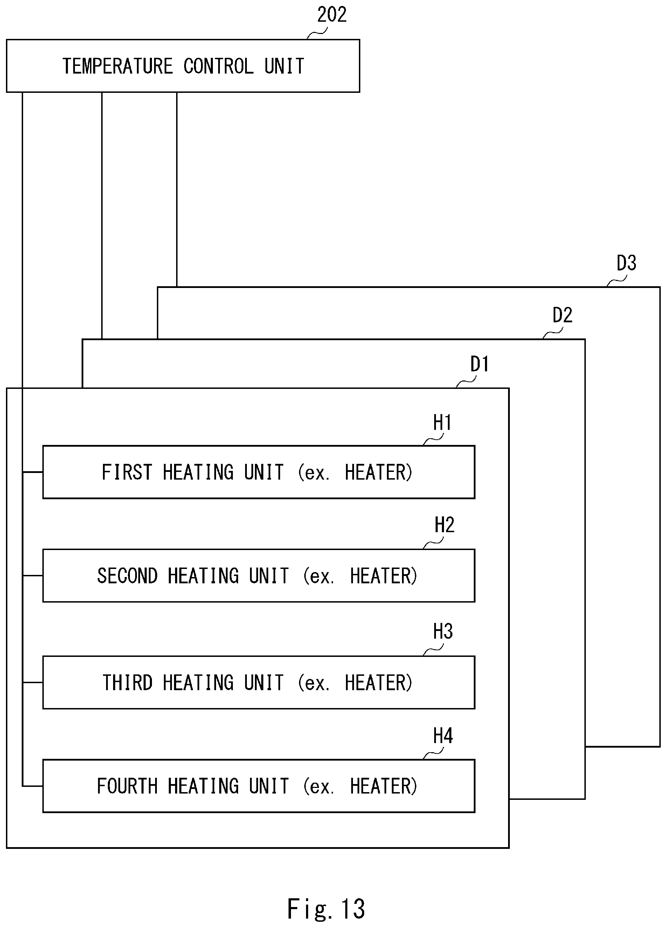

Fig. 13 is a block diagram showing an electric connection relation between the heating units H1-H4 and a temperature control unit 202. As shown in Fig. 13, each of the heaters is electrically connected to the temperature control unit 202. Note that the heating units H1-H4 are not limited to being heaters, and may be other heating means.

While not shown in the drawings, temperature measurement units are disposed in the four zones D11-D14. It is desirable that the temperature measurement units be, for example, thermocouples. Each of the temperature measurement units is electrically connected to the temperature control unit 202. Note that the temperature measurement units are not limited to be thermocouples and may be other temperature measurement units (temperature sensors).

The temperature control unit 202 separately controls temperatures of a plurality of parts (12 parts) of the reaction vessel 100 (intermediate part A3) corresponding to the respective zones by separately controlling (e.g., performing PID control on) the current flowing through each heater (heating wire). At this time, the temperature control unit 202 refers to the temperatures measured by the respective temperature measurement units. For example, when the temperature control unit 202 controls the temperature of the part of the reaction vessel 100 corresponding to the zone D11 by controlling the heater, which is the first heating unit H1 in the zone D11, the temperature control unit 202 refers to the temperature measured by the temperature measurement unit disposed in the zone D11. The same holds true for the case in which other heaters, namely the other heating units H2-H4, are controlled.

Note that the position (target) measured by the temperature measurement unit may be a heater disposed in a zone where this temperature measurement unit is disposed, a part of the reaction vessel 100 corresponding to the zone where this temperature measurement unit is disposed, a space between the heater disposed in the zone where this temperature measurement unit is disposed and the reaction vessel 100, or another position (target).

As described above, in the reaction apparatuses 10A, 10B, and 10C according to the first to third embodiments that will be described later, the temperature control region 110 is divided into a total of 12 zones expressed by $3\times4$, and can separately control the temperatures at the plurality of parts (12 parts) of the reaction vessel 100 (intermediate part A3) corresponding to the respective zones. Accordingly, the reaction apparatuses 10A, 10B, and 10C can achieve reaction of raw materials more preferably.

<Variation of Reaction Vessel 100>

Next, a variation of the reaction vessel 100 will be described.

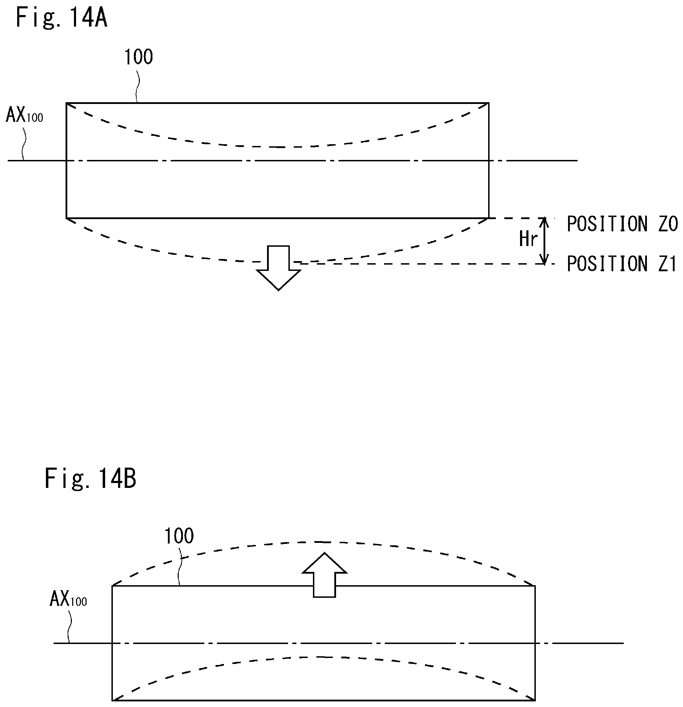

Fig. 14A shows a varied pattern example of the reaction vessel 100, and Fig. 14B shows another varied pattern example of the reaction vessel 100.

The reaction vessel 100 is supported at its both ends, and the intermediate part between these ends is not supported (see Fig. 4). Therefore, as shown in Fig. 14A, the reaction vessel 100 curves convexly downward due to its own weight. Since the rigidity (hardness) of the reaction vessel 100 is reduced when the reaction vessel 100 is heated, a downward convex deformation amount increases.

On the other hand, when the temperature of the reaction vessel 100 is controlled (temperature increase control or temperature decrease control), the reaction vessel 100 curves convexly upward (see Fig. 14B) due to expansion and contraction of the reaction vessel 100.

The reason why the reaction vessel 100 curves convexly upward is because the temperature in an upper part of the reaction vessel 100 and the temperature in a lower part of the reaction vessel 100 are deviated from each other. Specifically, the temperature in the upper part A of the reaction vessel 100 becomes higher than the temperature in the lower part of the reaction vessel 100. Therefore, the upper part A of the reaction vessel 100 expands more than the lower part C of the reaction vessel 100. As a result, the reaction vessel 100 curves convexly upward.

Note that the reason why the temperature in the upper part A of the reaction vessel 100 becomes higher than the temperature in the lower part of the reaction vessel 100 is because a current output state in the first heating unit H1 (see Fig. 12) disposed in the upper zone D11 of the temperature control region 110 becomes different from a current output state in the third heating unit H3 (see Fig. 12) disposed in the lower zone D13 of the temperature control region 110.

When, for example, the temperature in the lower part C of the reaction vessel 100 is 400°C, the temperature in the upper part A of the reaction vessel 100 becomes $(400+\Delta)$°C. Here, when the temperature of the reaction vessel 100 is controlled (temperature increase control or temperature decrease control) (e.g., when the temperature is controlled to increase from 400°C to 405°C), since the temperature in the lower part C (third heating unit H3) of the reaction vessel 100 is lower than the temperature in the upper part A (first heating unit H1) of the reaction vessel 100, a current greater than a current that flows through the first heating unit H1 flows through the third heating unit H3. Therefore, the lower part C of the reaction vessel 100 is heated more intensely than the upper part A of the reaction vessel 100.

At this time, since heat transfers from bottom to top, the third heating unit H3 through which the current greater than the current that flows through the first heating unit H1 passes heats not only the lower part C of the reaction vessel 100 but also the upper part A of the reaction vessel 100. As a result, the deviation between the temperature in the upper part of the reaction vessel 100 and the temperature in the lower part of the reaction vessel 100 (difference in the temperature) becomes greater.

<First Problem (problem when temperature of reaction vessel 100 is controlled (temperature increase control or temperature decrease control))>

Next, a first problem (problem when the temperature of the reaction vessel 100 is controlled (temperature increase control or temperature decrease control)) will be described.

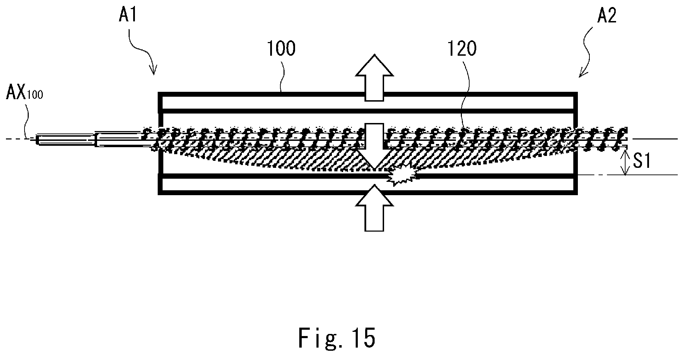

Fig. 15 is a diagram for describing the first problem (the problem when the temperature of the reaction vessel 100 is controlled (temperature increase control or temperature decrease control)).

When the temperature of the reaction vessel 100 is controlled as stated above (temperature increase control or temperature decrease control), the reaction vessel 100 curves convexly upward due to the deviation between the temperature in the upper part of the reaction vessel 100 and the temperature in the lower part of the reaction vessel 100 (difference in the temperature) (see Fig. 14B). On the other hand, the conveyance mechanism 120 (screw) curves downward convexly due to its own weight (see Fig. 15). Accordingly, a buffer space S1 (see Fig. 15) between the conveyance mechanism 120 (screw) and the reaction vessel 100 becomes gradually narrow, and eventually the top part of the flight of the conveyance mechanism 120 (screw) contacts the inner wall of the reaction vessel 100. This leads to a problem that it is possible that the normal operation of the reaction apparatuses 10A-10C may be inhibited (reaction apparatuses 10A-10C may be in failure) (first problem).

<Desirable Temperature Conditions>

When the above first problem is taken into account, it is desirable that the temperature control unit 202 separately control each heater (heating wire) in such a way that the difference in the temperature among the upper part A, the lower part C, the left part D, and the right part B of the reaction vessel 100 (see Fig. 12) becomes as small as possible.

Specifically, the difference in the temperature among the upper part A, the lower part C, the left part D, and the right part B of the reaction vessel 100 is preferably within $\pm20$°C, and further preferably within $\pm10$°C.

Next, a process of cooling the temperature of the reaction vessel 100 (the upper part A, the lower part C, the left part D, and the right part B) from the current temperature (e.g., 1000°C) to the target temperature (e.g., 500°C) will be described.

In this process, the temperature control unit 202 separately controls each heater (heating wire) in such a way that the temperature of the reaction vessel 100 (the upper part A, the lower part C, the left part D, and the right part B) is changed from the current temperature (e.g., 1000°C) to the target temperature (e.g., 500°C).

At this time, in order to reduce the difference in the temperature among the upper part A, the lower part C, the left part D, and the right part B of the reaction vessel 100, it is desirable that the temperature decrease rate (cooling rate) of the reaction vessel 100 (the upper part A, the lower part C, the left part D, and the right part B) be low as much as possible. Specifically, the temperature decrease rate of the reaction vessel 100 (the upper part A, the lower part C, the left part D, and the right part B) is preferably 10°C/min or lower, more preferably 5°C/min or lower, and further preferably 2°C/min or lower. The same holds true for the temperature increase rate (heating rate) of the reaction vessel 100 (the upper part A, the lower part C, the left part D, and the right part B). The desirable temperature decrease rate and temperature increase rate can be obtained, for example, through experience, experiments, or a predetermined calculation.

<Second Problem (problem when temperature of reaction vessel 100 is controlled (temperature increase control or temperature decrease control))>

When the temperature of the reaction vessel 100 is controlled (temperature increase control or temperature decrease control) in the reaction apparatus 10 in the reference example 2 shown in Fig. 4, a gradual temperature increase or a gradual temperature decrease is normally performed.

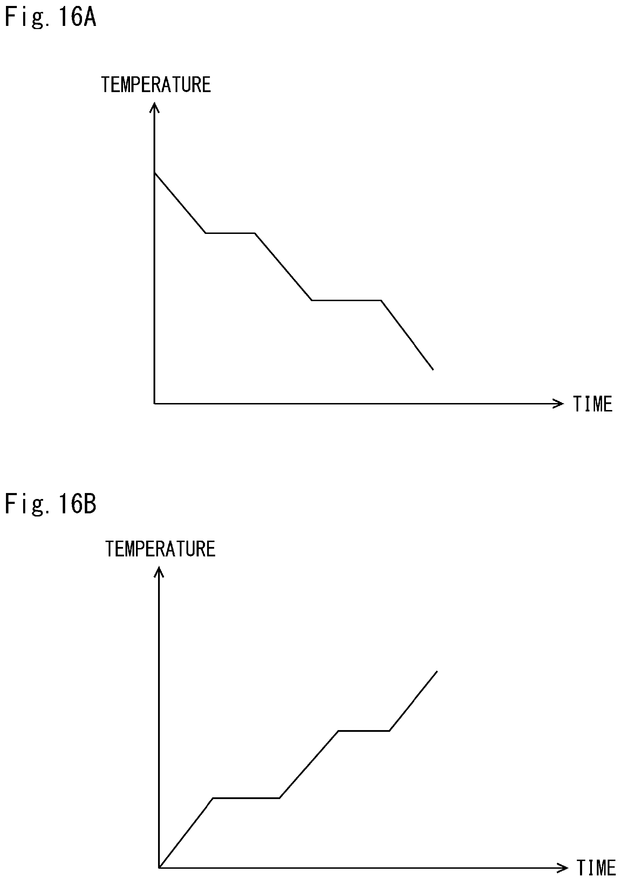

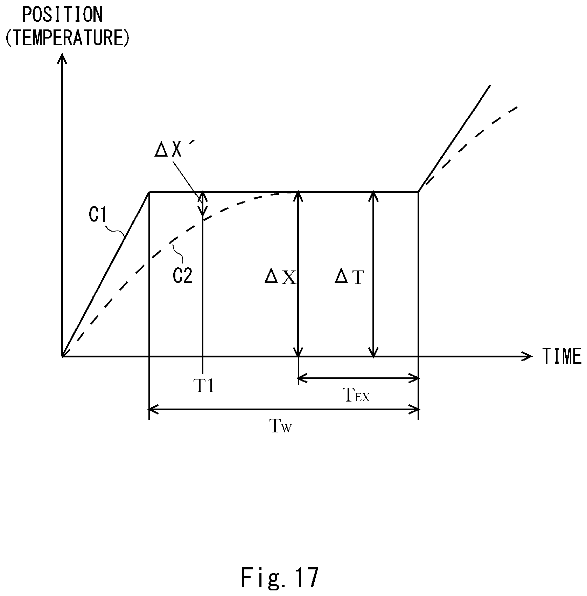

Fig. 16A shows an example of the gradual temperature decrease. Fig. 16B shows an example of the gradual temperature increase. Fig. 17 is a graph showing a relation between a temperature change C1 of the temperature increase and an actual temperature change C2 of the reaction vessel 100 when the temperature of the reaction vessel 100 is controlled to increase to a target temperature (heating control) at a certain temperature increase rate in the reaction apparatus 10 in the reference example 2.

The reason why the gradual temperature increase is performed in the reaction apparatus 10 in the reference example 2 shown in Fig. 4 is as follows.

That is, as shown in Fig. 17, when the temperature of the reaction vessel 100 is controlled to increase to a target temperature (heating control) at a certain temperature increase rate, a displacement amount $\Delta X'$ (a displacement amount in the vertical direction of the reaction vessel 100) that cannot follow the temperature change C1 (time axis) of the temperature increase occurs before the temperature eventually reaches the target temperature (e.g., see time T1 in Fig. 17). Therefore, it is required to perform gradual temperature increase control and set a standby time $T_W$ (see Fig. 17) to wait until the displacement amount in the vertical direction of the reaction vessel 100 becomes $\Delta X$. This standby time $T_W$ is set taking into consideration a standby time to wait until the above temperature deviation $\Delta$ (the deviation between the temperature in the upper part of the reaction vessel 100 and the temperature in the lower part of the reaction vessel 100) becomes as small as possible.

In Fig. 17, the symbol $\Delta X$ shows a displacement amount in the vertical direction of the reaction vessel 100 in a case where the temperature of the reaction vessel 100 has reached the target temperature (in the case shown in Fig. 17, intermediate temperature) (when the difference in the temperature is $\Delta T$). In Fig. 17, the symbol $\Delta X'$ indicates a displacement amount that cannot follow the temperature change C1 (time axis) of the temperature increase (the displacement amount in the vertical direction of the reaction vessel 100) at time T1, which is a time before the temperature reaches the target temperature.

However, since the above standby time $T_W$ is a time manually set mainly based on experience, "extra standby time $T_{EX}$" (see Fig. 17) occurs. Therefore, there is a problem, when gradual temperature increase is performed in the reaction apparatus 10 in the above reference example 2, that a time until the temperature of the reaction vessel 100 (the upper part A, the lower part C, the left part D, and the right part B) reaches the target temperature (temperature increase time) increases (e.g., it takes several days) (second problem). Similarly, when gradual temperature decrease is performed in the reaction apparatus 10 in the above reference example 2 as well, there is a problem that a time until the temperature of the reaction vessel 100 (the upper part A, the lower part C, the left part D, and the right part B) reaches the target temperature (temperature decrease time) increases (e.g., it takes several days) (second problem).

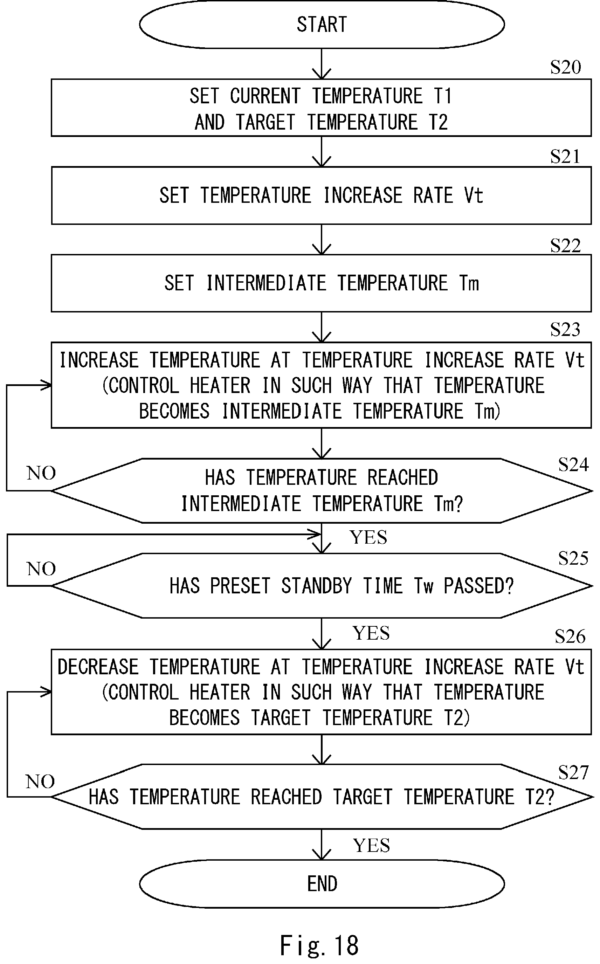

Next, with reference to Fig. 18, the above second problem will be further described.

Fig. 18 shows an example of a flowchart of temperature increase processing for performing gradual temperature increase in the reaction apparatus 10 in the reference example 2.

First, a current temperature T1 (e.g., 500°C), a target temperature T2 (e.g., 1000°C), a temperature increase rate Vt (e.g., 10°C/min), and an intermediate temperature Tm (e.g., 750°C) are set (Steps S20-S22). They are set, for example, by an operator manually.

Next, the temperature is increased at the temperature increase rate Vt (Step S23). This is achieved by the temperature control unit 202 controlling each heater in such a way that the temperature of the reaction vessel 100 changes from the current temperature T1 to the intermediate temperature Tm.

Next, when the temperature of the reaction vessel 100 has reached the intermediate temperature Tm (e.g., 750°C) (Step S24: YES), the operation waits for a preset standby time Tw (see Fig. 17) (Step S25: NO). During the standby time Tw, the intermediate temperature Tm is maintained.

Next, when the preset standby time Tw has passed (Step S25: YES), the temperature increases at the temperature increase rate Vt (Step S26). This is implemented by the temperature control unit 202 controlling each heater in such a way that the temperature of the reaction vessel 100 reaches the target temperature T2.

After the temperature of the reaction vessel 100 has reached the target temperature T2 (Step S27: YES), the temperature increase processing (Steps S20-S27) is ended.

As described above, when the gradual temperature increase is performed in the reaction apparatus 10 in the above reference example 2, "extra standby time $T_{EX}$" (see Fig. 17) occurs in Step S25. Therefore, there is a problem, when gradual temperature increase is performed in the reaction apparatus 10 in the above reference example 2, that the heating time of the reaction vessel 100 (the upper part A, the lower part C, the left part D, and the right part B) increases (e.g., it takes several days to cool the reaction vessel 100) (second problem). Likewise, there is a problem, in a case where gradual temperature decrease is performed in the reaction apparatus 10 in the above reference example 2 as well, that the cooling time until the temperature of the reaction vessel 100 (the upper part A, the lower part C, the left part D, and the right part B) reaches a target temperature increases (e.g., it takes several days to cool the reaction vessel 100) (second problem).

<First Embodiment>

Next, a configuration example 1 for solving the aforementioned first and second problems will be described as a first embodiment. Hereinafter, a reaction apparatus according to the first embodiment is referred to as a reaction apparatus 10A.

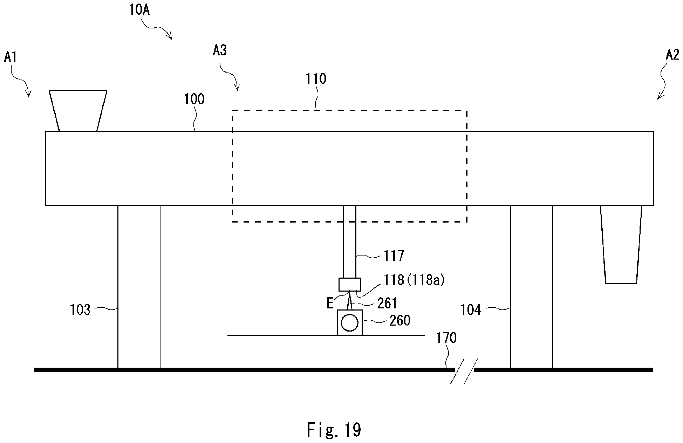

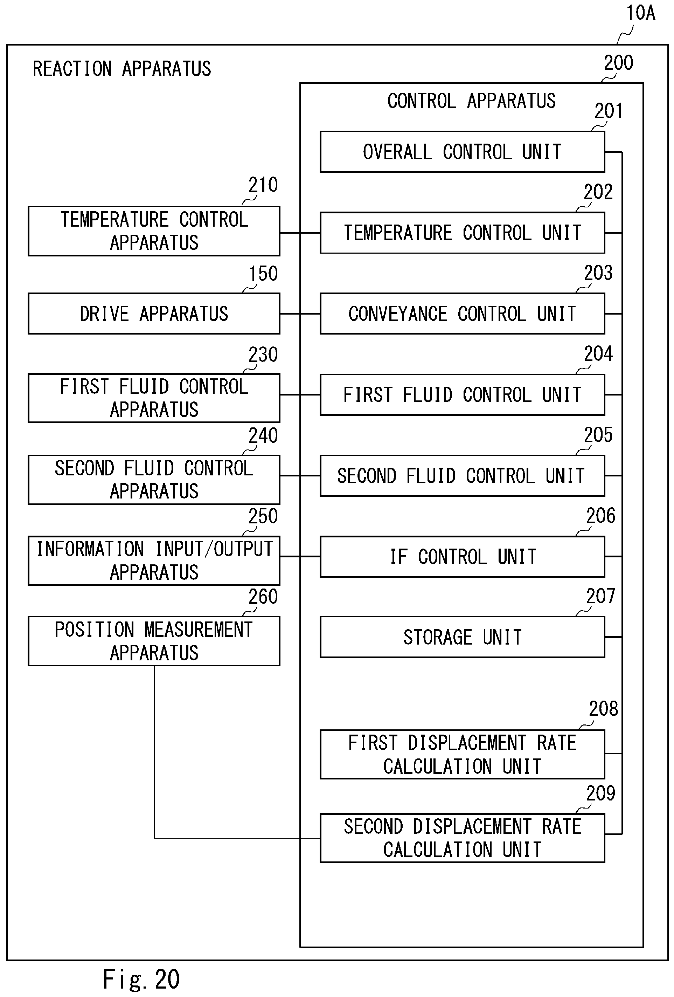

Fig. 19 is a schematic configuration diagram of the reaction apparatus 10A in the first embodiment. Fig. 20 is a block diagram of the reaction apparatus 10A according to the first embodiment.

As shown in Figs. 19 and 20, the reaction apparatus 10A in the first embodiment corresponds to the one in which a projecting part 117, a position measurement apparatus 260, a first displacement rate calculation unit 208, and a second displacement rate calculation unit 209 are added to the reaction apparatus 10 in the reference example 2. Hereinafter, the components similar to those in the reaction apparatus 10 in the above reference example 2 are denoted by the same reference symbols, and descriptions thereof will be omitted as appropriate.

The projecting part 117 projects downward from the lower central part of the reaction vessel 100 (temperature control region 110) in the longitudinal direction. The base end side of the projecting part 117 is connected to the lower central part of the reaction vessel 100 (temperature control region 110) in the longitudinal direction by welding or the like. On the other hand, a metal plate 118 (measurement surface 118a), which is a target to be measured by the position measurement apparatus 260, is provided on a tip end side (lower end side in Fig. 19) of the projecting part 117. The measurement surface 118a is a flat surface that is parallel to the floor surface 170 on which the position measurement apparatus 260 is provided.

By providing the projecting part 117 as described above and performing measurement on the tip end side thereof (metal plate 118 (measurement surface 118a)), the displacement (position) of the reaction vessel 100 in the vertical direction can be measured in an environment of a room temperature away from the lower central part (whose temperature becomes high as it is in the furnace body) of the reaction vessel 100 (temperature control region 110) in the longitudinal direction. As a result, the accuracy of measuring the displacement (position) of the reaction vessel 100 in the vertical direction is improved.

Note that, as long as the displacement (position) of the reaction vessel 100 in the vertical direction can be measured, the part which the projecting part 117 is connected may be a part other than the lower central part of the reaction vessel 100 (temperature control region 110) in the longitudinal direction (e.g., the upper central part of the reaction vessel 100 (temperature control region 110) in the longitudinal direction). Further, the direction in which the projecting part 117 is projected may be a direction other than downward (e.g., upward or side) as long as the displacement (position) of the reaction vessel 100 in the vertical direction can be measured. Further, the number of projecting parts 117 may be 1 or may be plural.

The position measurement apparatus 260 measures the displacement (position) of the reaction vessel 100 (a metal plate 118 (measurement surface 118a) provided on the tip end side of the projecting part 117) in the vertical direction. Since the displacement of the reaction vessel 100 in the vertical direction is extremely slight, it is desirable to use a contact-type measurement apparatus such as a digital dial gauge or a micrometer as the position measurement apparatus 260. Hereinafter, an example in which a digital dial gauge is used as the position measurement apparatus 260 will be described. Hereinafter, the position measurement apparatus 260 is also referred to as a digital dial gauge 260. As shown in Fig. 19, the digital dial gauge 260 is disposed in a state in which its contact probe 261 contacts the metal plate 118 (measurement surface 118a) provided on the tip end side of the projecting part 117. Fig. 19 shows an example of a contact-type position measurement apparatus in which the digital dial gauge 260 includes a contact that contacts the tip end side of the projecting part of the present disclosure.

Note that the position measurement apparatus 260 is not limited to a contact-type measurement apparatus, and may be, for example, a non-contact measurement apparatus (e.g., laser displacement sensor) such as a measurement apparatus that irradiates laser beams through quartz glass. Further, for example, the projecting part 117 may be omitted, and one end surface of another rod-shaped member may be caused to contact a lower central part of the reaction vessel 100 (temperature control region 110) in the longitudinal direction and the other end surface of the other rod-shaped member may be measured by a contact-type or non-contact measurement apparatus. Further, the projecting part 117 may be omitted, and the lower central part of the reaction vessel 100 (temperature control region 110) in the longitudinal direction may be measured by a contact-type or or non-contact measurement apparatus.

The position measurement apparatus 260 measures the actual position of the specific part of the reaction vessel 100 that is displaced as stated above (see Figs. 14A and 14B). This specific part is, for example, a contact point (hereinafter this point will be represented as a point E: see Fig. 19) between the contact probe 261 of the digital dial gauge 260 and the metal plate 118 (measurement surface 118a). Note that this specific part may be a point other than the point E. Hereinafter, an example in which this specific part is the point E of the reaction vessel 100 will be described.

Here, the position of the point E measured at a room temperature is set to be a point zero (H0), the position of the point E measured at a predetermined temperature heated or cooled from the room temperature is set to be (H1), and the difference between them (H1-H0) is set to be the displacement of the point E in the vertical direction.

On the other hand, a part of the projecting part 117 is inside the reaction vessel 100 (temperature control region 110). Therefore, the projecting part 117 is heated or cooled at a predetermined temperature. A displacement (Hr) of the reaction vessel 100 in the vertical direction is expressed by the following Expression 1 using a correction value (Hm) in which a thermal expansion amount of the projecting part 117

is taken into account.

$$Hr=(H1-H0)-Hm \cdots (Expression \ 1)$$

As shown in Fig. 14A, Hr=Z1-Z0. Note that Z0 represents a position of the central part of the reaction vessel 100 in the longitudinal direction measured at the room temperature, and Z1 represents a position of the central part of the reaction vessel 100 in the longitudinal direction measured at a predetermined temperature heated or cooled from the room temperature. Note that means for determining the correction value Hm is not particularly limited. The correction value Hm may be determined based on experimental data or may be determined by a simulation such as heat transfer analysis.

Note that the projecting part 117 may have a structure in which a fluid can pass through the inside of the projecting part 117. The projecting part 117 may be, for example, a first fluid supply pipe 133 or a second fluid supply pipe 143. Further, the projecting part 117 may include a temperature measurement unit configured to measure the temperature inside thereof or the temperature of an outer peripheral part thereof. It is therefore possible to determine the correction value Hm more accurately.

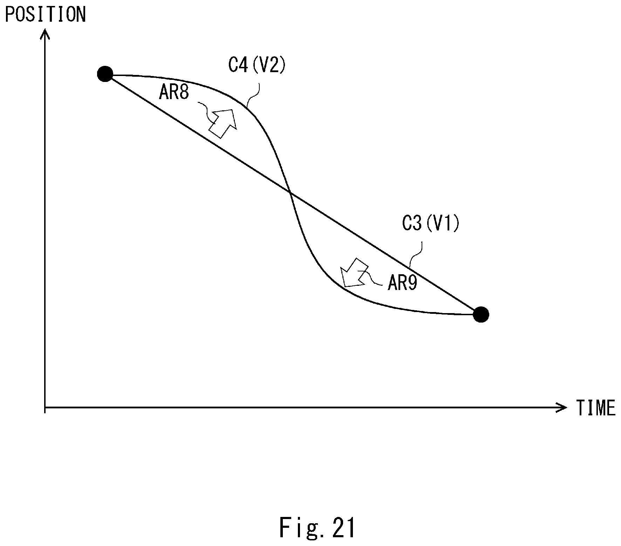

The first displacement rate calculation unit 208 calculates a displacement rate (desirable displacement rate V1) of the point E of the reaction vessel 100 when the temperature of the reaction vessel 100 (intermediate part A3) is controlled from the current temperature T1 to the target temperature T2 at a desirable temperature decrease rate (or a temperature increase rate). At this time, the first displacement rate calculation unit 208 performs calculation in consideration of, for example, a desirable temperature decrease rate (or a temperature increase rate), and material properties such as thermal expansion coefficients of each component forming the reaction vessel 100. This desirable displacement rate is a displacement rare considered to minimize the deviation between the temperature in an upper part of the reaction vessel 100 and the temperature in a lower part of the reaction vessel 100. This desirable displacement rate V1 (calculated value) can be expressed, for example, by a straight line C3 in Fig. 21. Fig. 21 is a graph showing a relation between a desirable displacement rate C3 of the point E and an actual displacement rate C4 of the point E when the temperature of the reaction vessel 100 is controlled to decrease (cooling control). The first displacement rate calculation unit 208 is implemented, for example, by the control apparatus 200 executing a predetermined program. The first displacement rate calculation unit 208 is not limited to being implemented by a predetermined program and may be implemented by hardware. The calculation performed by the first displacement rate calculation unit 208 may be performed manually.

The second displacement rate calculation unit 209 calculates the actual displacement rate V2 of the point E based on actual positions (a plurality of positions that have been measured at times different from one another and have been corrected by the above correction value (Hm)) of the point E (specific part) measured by the position measurement apparatus 260. The actual displacement rate V2 (measured value) of the point E can be expressed, for example, by a curved line C4 in Fig. 21. The second displacement rate calculation unit 209 is implemented, for example, by the control apparatus 200 executing a predetermined program. Note that the second displacement rate calculation unit 209 is not limited to being implemented by a predetermined program and may be implemented by hardware.

The temperature control unit 202 executes temperature decrease rate control processing (or temperature increase rate control processing) for controlling a temperature decrease rate (or a temperature increase rate) of the reaction vessel 100 (intermediate part A3) in such a way that the actual displacement rate V2 of the point E follows (matches) the desirable displacement rate V1 of the point E. This temperature decrease rate control processing (and temperature increase rate control processing) will be described later. The temperature control unit 202 is implemented, for example, by the control apparatus 200 executing a predetermined program. Note that the temperature control unit 202 is not limited to being implemented by a predetermined program and may be implemented by hardware.

<Operation Example 1 of Reaction Apparatus 10A>

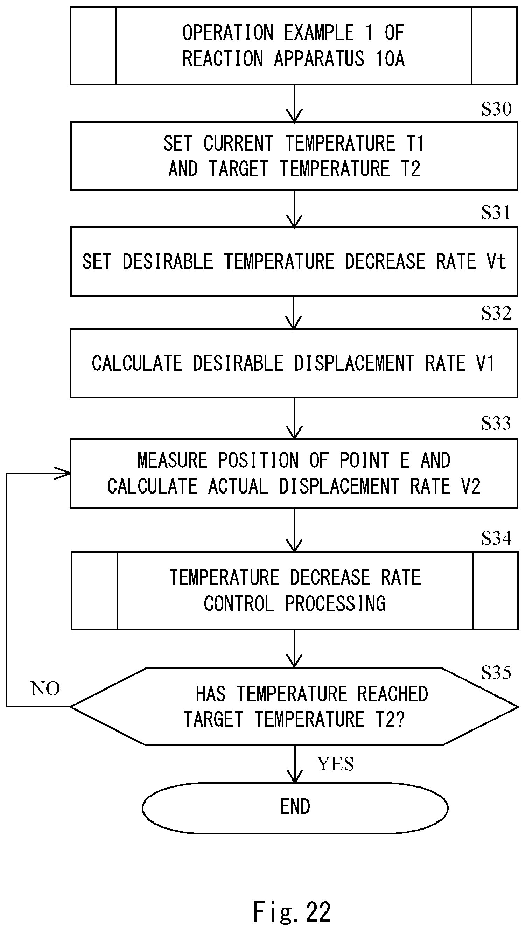

Next, with reference to Fig. 22, an operation example 1 of the reaction apparatus 10A will be described.

Fig. 22 is a flowchart of the operation example 1 of the reaction apparatus 10A.

Hereinafter, as the operation example 1 of the reaction apparatus 10A, an operation example when the temperature of the reaction vessel 100 is controlled to decrease (cooling control) from the current temperature 1000°C to the target temperature 500°C will be described.

First, the current temperature T1 (1000°C), the target temperature T2 (500°C), and the desirable temperature decrease rate Vt (e.g., 1°C/min) are set (Steps S30-S31). They are set, for example, by an operator manually.

Next, the desirable displacement rate V1 is calculated (Step S32). This is implemented, for example, by the first displacement rate calculation unit 208. Specifically, the first displacement rate calculation unit 208 calculates the displacement rate (desirable displacement rate V1) of the point E of the reaction vessel 100 when the temperature of the reaction vessel 100 (intermediate part A3) is controlled to change from the current temperature T1 to the target temperature T2 at a desirable temperature decrease rate Vt. At this time, the first displacement rate calculation unit 208 performs calculation in consideration of, for example, a desirable temperature decrease rate Vt, and material properties such as thermal expansion coefficients of each component forming the reaction vessel 100. This desirable displacement rate V1 (calculated value) can be expressed, for example, by a straight line C3 in Fig. 21.

Next, the position of the point E is measured and the actual displacement rate V2 (measured value) is calculated (Step S33). This is implemented by the second displacement rate calculation unit 209. Specifically, the second displacement rate calculation unit 209 calculates the actual displacement rate V2 of the point E based on the actual positions (a plurality of positions that have been measured at times different from one another and have been corrected by the above correction value (Hm)) of the point E (specific part) measured by the position measurement apparatus 260. This actual displacement rate V2 (measured value) of the point E can be expressed, for example, by a curved line C4 in Fig. 21.

Next, the temperature decrease rate control processing is performed (Step S34). This temperature decrease rate control processing, which is processing for controlling the temperature decrease rate of the reaction vessel 100 (intermediate part A3) in such a way that the actual displacement rate V2 of the point E calculated in Step S33 follows (matches) the desirable displacement rate V1 of the point E calculated in Step S32, is implemented by the temperature control unit 202.

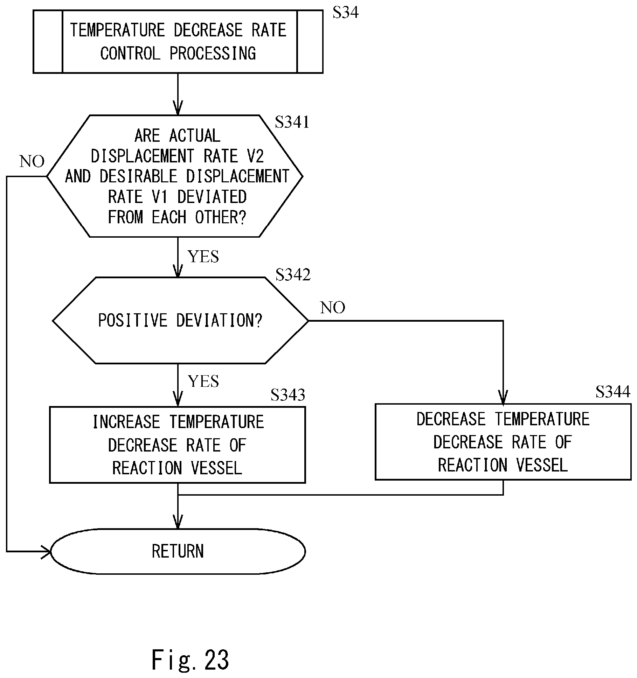

With reference to Fig. 23, the temperature decrease rate control processing (Step S34) will be described in detail. Fig. 23 is a flowchart of the temperature decrease rate control processing.

As shown in Fig. 23, first, it is determined whether or not the actual displacement rate V2 and the desirable displacement rate V1 are deviated from each other (e.g., whether the difference between the actual displacement rate V2 and the desirable displacement rate V1 exceeds a threshold) (Step S341). This is determined, for example, by the temperature control unit 202 comparing the actual displacement rate V2 of the point E calculated in Step S33 with the desirable displacement rate V1 of the point E calculated in Step S32.

As a result, when the actual displacement rate V2 and the desirable displacement rate V1 are deviated from each other (Step S341: YES) and this deviation is a positive deviation (see the arrow AR8 in Fig. 21) (Step S342: YES), this means that the actual displacement rate V2 of the point E is lower than the desirable displacement rate V1 of the point E, in which case the temperature decrease rate of the reaction vessel 100 (the upper part A, the lower part C, the left part D, and the right part B) is increased (Step S343). For example, the temperature control unit 202 increases the temperature decrease rate from 1°C/min to 2°C/min. Specifically, the temperature control unit 202 controls each of the heaters in such a way that the actual displacement rate V2 of the point E follows (matches) the desirable displacement rate V1 of the point E. Accordingly, the actual displacement rate V2 of the point E follows the desirable displacement rate V1 of the point E (see Fig. 21).

On the other hand, when the actual displacement rate V2 and the desirable displacement rate V1 are deviated from each other (Step S341: YES) and this deviation is a negative deviation (see the arrow AR9 in Fig. 21) (Step S342: NO), this means that the actual displacement rate V2 of the point E is higher than the desirable displacement rate V1 of the point E, in which case the temperature decrease rate of the reaction vessel 100 (the upper part A, the lower part C, the left part D, and the right part B) is decreased (Step S344). For example, the temperature control unit 202 decreases the temperature decrease rate from 2°C/min to 1°C/min. Specifically, the temperature control unit 202 controls each heater in such a way that the actual displacement rate V2 of the point E follows (matches) the desirable displacement rate V1 of the point E. Accordingly, the actual displacement rate V2 of the point E follows the desirable displacement rate V1 of the point E (see Fig. 21).

When the actual displacement rate V2 and the desirable displacement rate V1 are not deviated from each other (Step S341: NO), the processing after the above Step S341 is not performed.

The processing in the above Steps S33 and S34 is repeatedly performed until the temperature of the reaction vessel 100 reaches the target temperature T2 set in Step S30 (Step S35: NO).

Then, when the temperature of the reaction vessel 100 reaches the target temperature T2 (Step S35: YES), the operation example 1 of the reaction apparatus 10A is ended.

As described above, with the operation example 1 of the reaction apparatus 10A, the actual displacement rate V2 of the point E follows the desirable displacement rate V1 of the point E until the temperature of the reaction vessel 100 reaches the target temperature T2 (see Fig. 21). Accordingly, the above first and second problems are solved.

<Operation Example 2 of Reaction Apparatus 10A>

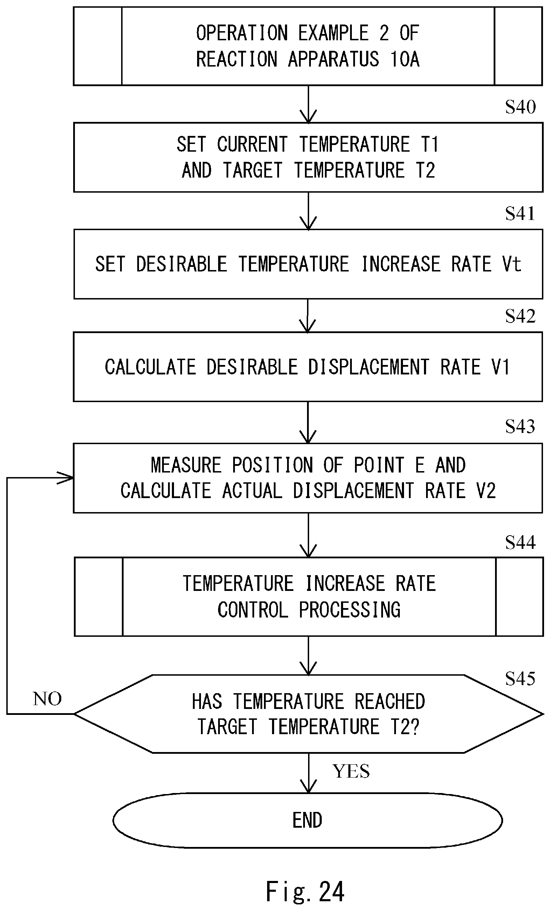

Next, with reference to Fig. 24, an operation example 2 of the reaction apparatus 10A will be described. While the operation example 1 of the reaction apparatus 10A is the example of the temperature decrease control (cooling control) of the reaction vessel 100, the operation example 2 of the reaction apparatus 10A is an example of temperature increase control (heating control) of the reaction vessel 100.

Fig. 24 is a flowchart of the operation example 2 of the reaction apparatus 10A.

Hereinafter, as the operation example 2 of the reaction apparatus 10A, an operation example when the temperature of the reaction vessel 100 is controlled to increase (heating control) from the current temperature 500°C to the target temperature 1000°C will be described.

First, the current temperature T1 (500°C), the target temperature T2 (1000°C), and the desirable temperature increase rate Vt (e.g., 1°C/min) are set (Steps S40-S41). They are set, for example, by an operator manually.

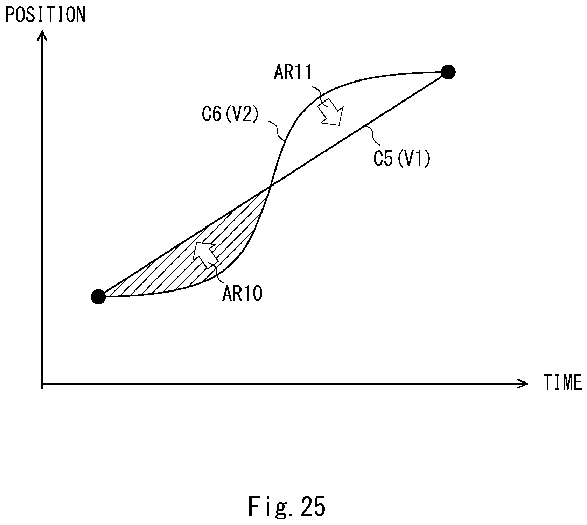

Next, the desirable displacement rate is calculated (Step S42). This is implemented, for example, by the first displacement rate calculation unit 208. Specifically, the first displacement rate calculation unit 208 calculates the displacement rate (desirable displacement rate V1) of the point E of the reaction vessel 100 when the temperature of the reaction vessel 100 (intermediate part A3) is controlled to change from the current temperature T1 to the target temperature T2 at a desirable temperature increase rate Vt. At this time, the first displacement rate calculation unit 208 calculates the desirable temperature increase rate Vt in consideration of, for example, material properties or the like such as a thermal expansion coefficient of each component forming the reaction vessel 100. This desirable displacement rate V1 (calculated value) can be expressed, for example, by a straight line C5 in Fig. 25. Fig. 25 is a graph showing a relation between the desirable displacement rate V1 of the point E and the actual displacement rate V2 of the point E when the temperature of the reaction vessel 100 is controlled to increase (heating control).

Next, the position of the point E is measured and the actual displacement rate V2 (measured value) is calculated (Step S43). This is implemented by the second displacement rate calculation unit 209. Specifically, the second displacement rate calculation unit 209 calculates the actual displacement rate V2 of the point E based on the actual positions (a plurality of positions that have been measured at times different from one another and have been corrected by the above correction value (Hm)) of the point E (specific part) measured by the position measurement apparatus 260. This actual displacement rate V2 (measured value) of the point E can be expressed, for example, by a curved line C6 in Fig. 25.

Next, the temperature increase rate control processing is performed (Step S44). This temperature increase rate control processing, which is processing for controlling the temperature increase rate of the reaction vessel 100 (intermediate part A3) in such a way that the actual displacement rate V2 of the point E calculated in Step S43 follows (matches) the desirable displacement rate V1 of the point E calculated in Step S42, is implemented by the temperature control unit 202.

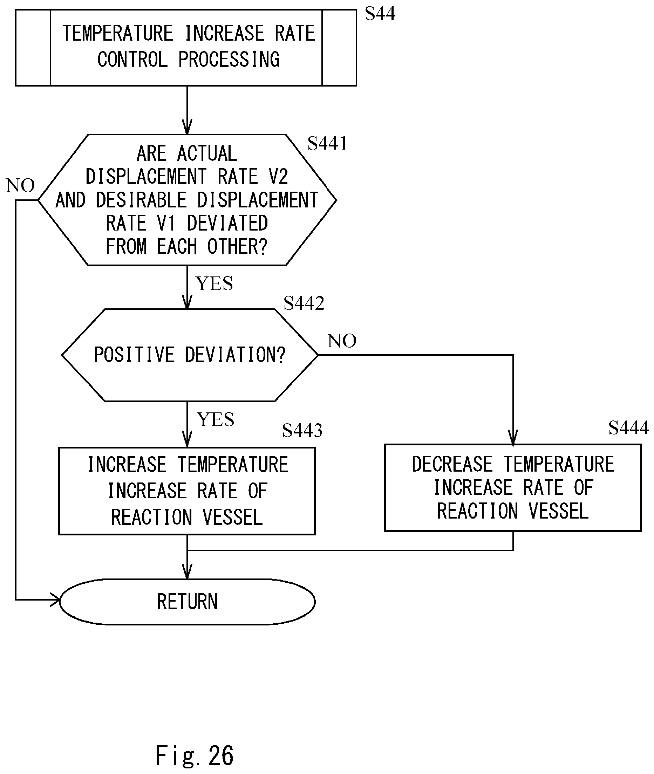

With reference to Fig. 26, the temperature increase rate control processing (Step S44) will be described in detail. Fig. 26 is a flowchart of the temperature increase rate control processing.

As shown in Fig. 26, first, it is determined whether or not the actual displacement rate V2 and the desirable displacement rate V1 are deviated from each other (e.g., whether the difference between the actual displacement rate V2 and the desirable displacement rate V1 exceeds a threshold) (Step S441). This is determined, for example, by the temperature control unit 202 comparing the actual displacement rate V2 of the point E calculated in Step S43 with the desirable displacement rate V1 of the point E calculated in Step S42.

As a result, when the actual displacement rate V2 and the desirable displacement rate V1 are deviated from each other (Step S441: YES) and this deviation is a positive deviation (see the arrow AR10 in Fig. 25) (Step S442: YES), this means that the actual displacement rate V2 of the point E is lower than the desirable displacement rate V1 of the point E, in which case the temperature increase rate of the reaction vessel 100 (the upper part A, the lower part C, the left part D, and the right part B) is increased (Step S443). For example, the temperature control unit 202 increases the temperature increase rate from 1°C/min to 2°C/min. Specifically, the temperature control unit 202 controls each of the heaters in such a way that the actual displacement rate V2 of the point E follows (matches) the desirable displacement rate V1 of the point E.

Accordingly, the actual displacement rate V2 of the point E follows the desirable displacement rate V1 of the point E (see Fig. 25).

On the other hand, when the actual displacement rate V2 and the desirable displacement rate V1 are deviated from each other (Step S441: YES) and this deviation is a negative deviation (see the arrow AR11 in Fig. 25) (Step S442: NO), this means that the actual displacement rate V2 of the point E is higher than the desirable displacement rate V1 of the point E, in which case the temperature increase rate of the reaction vessel 100 (the upper part A, the lower part C, the left part D, and the right part B) is reduced (Step S444). For example, the temperature control unit 202 decreases the temperature increase rate from 2°C/min to 1°C/min. Specifically, the temperature control unit 202 controls each of the heaters in such a way that the actual displacement rate V2 of the point E follows (matches) the desirable displacement rate V1 of the point E. Accordingly, the actual displacement rate V2 of the point E follows the desirable displacement rate V1 of the point E (see Fig. 25).

When the actual displacement rate V2 and the desirable displacement rate V1 are not deviated from each other (Step S441: NO), processing after the above Step S441 is not performed.

The above processing in Steps S43 and S44 is repeatedly performed until the temperature of the reaction vessel 100 reaches the target temperature T2 set in Step S40 (Step S45: NO).

When the temperature of the reaction vessel 100 has reached the target temperature (Step S45: YES), the operation example 2 of the reaction apparatus 10A is ended.

As described above, according to the operation example 2 of the reaction apparatus 10A, the actual displacement rate V2 of the point E follows the desirable displacement rate V1 of the point E until the temperature of the reaction vessel 100 reaches the target temperature T2 (see Fig. 25). Accordingly, the aforementioned first and second problems are solved.

<Third Problem (problem when temperature of reaction vessel 100 is controlled to increase (heating control))>

As shown in Fig. 26, when the temperature of the reaction vessel 100 is controlled to increase (heating control), there may be a case in which, even though the temperature increase rate of the reaction vessel 100 (the upper part A, the lower part C, the left part D, and the right part B) is increased (Step S443), the point E may not be displaced, that is, the actual displacement rate V2 (measured value) of the point E does not follow the desirable displacement rate V1 (calculated value) of the point E.

In this case, it is possible, for example, that there is an operation failure in the second support part 104, which is a movable support part, due to a contact of the reaction vessel 100 with the conveyance mechanism 120 (third problem). The hatching area in Fig. 25 shows a hazardous area where it is possible that the reaction vessel 100 may contact the conveyance mechanism 120.

<Second Embodiment>

Next, as a second embodiment, a configuration example 1 for solving the above third problem will be described. Hereinafter, a reaction apparatus according to the second embodiment will be referred to as a reaction apparatus 10B.

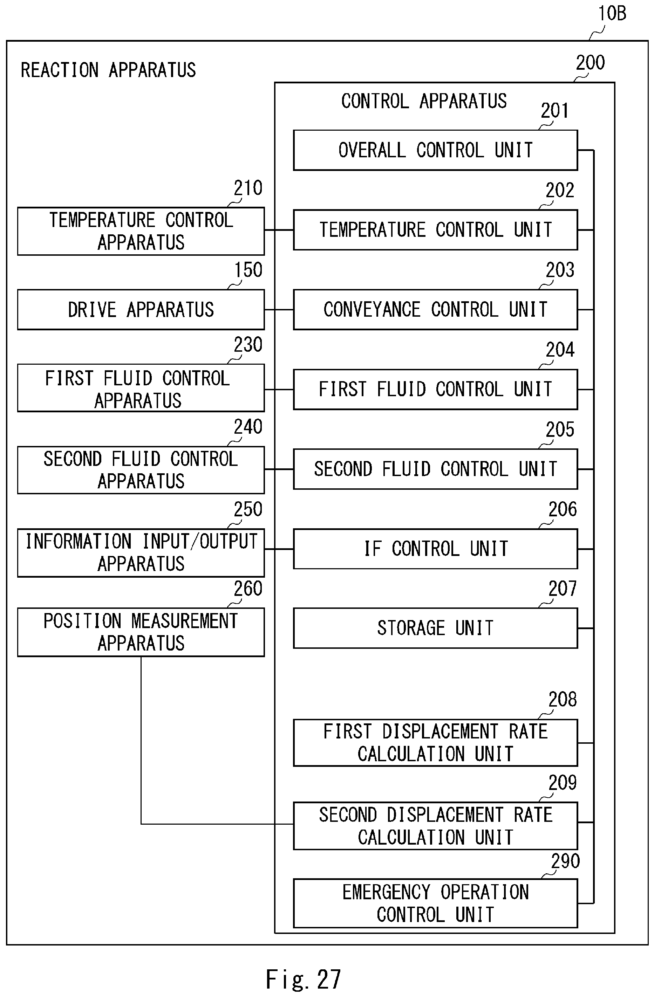

Fig. 27 is a block diagram of the reaction apparatus 10B in the second embodiment.

As shown in Fig. 27, the reaction apparatus 10B in the second embodiment corresponds to the one in which an emergency operation control unit 290 is added to the reaction apparatus 10A in the first embodiment. Hereinafter, the configurations similar to those in the reaction apparatus 10A in the above first embodiment are denoted by the same reference symbols, and descriptions thereof will be omitted as appropriate.

The emergency operation control unit 290 performs emergency processing (emergency operation) for avoiding a situation where the reaction apparatus 10B can no longer normally operate. This emergency processing may be, for example, processing for controlling each heater so as to decrease the temperature increase rate of the reaction vessel 100, processing for stopping (performing an emergency stop of) the temperature increase in the reaction vessel 100, or other processing.

The processing for stopping (performing an emergency stop of) the temperature increase in the reaction vessel 100 may be processing (e.g., stop of energizing the temperature control unit 202) similar to heat stop processing that is performed when an emergency stop button (not shown) provided in the reaction apparatus 10B is pressed.

Further, the emergency processing may be, for example, processing for broadcasting information indicating that an abnormality has occurred in the reaction apparatus 10B. This broadcasting processing may be, for example, processing for displaying, on a display device (e.g., a display), information indicating that an abnormality has occurred in the reaction apparatus 10B, or processing for outputting a voice of the information indicating that an abnormality has occurred in the reaction apparatus 10B from a voice output device (e.g., a speaker).

<Emergency Processing Example 1>

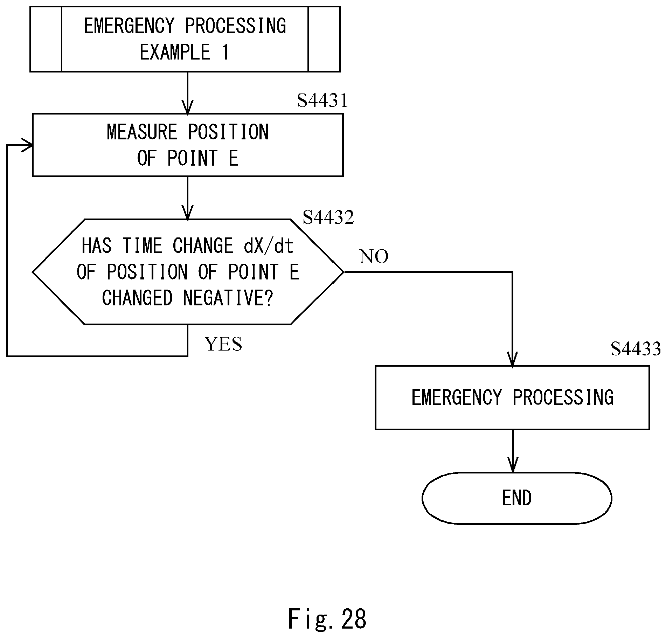

Next, with reference to Fig. 28, an emergency processing example 1 will be described in detail.

Fig. 28 is a flowchart of the emergency processing example 1. The emergency processing example 1 is performed in Step S443 (see Fig. 26).

First, the position of the point E is measured (Step S4431). This is implemented by the position measurement apparatus 260.

Next, it is determined whether a time change $dx/dt$ of the position of the point E measured in Step S4431 has changed negative (Step S4432). When the time change $dx/dt$ of the position of the point E has changed negative (Step S4432: YES), this means that the position of the point E is correctly displaced in the direction of the major axis $AX_{100}$ in accordance with heating of the reaction vessel 100, in which case the process moves to Step S4431 without performing emergency processing (emergency operation), and then the following processing is repeatedly performed.

On the other hand, when the time change $dx/dt$ of the position of the point E has not changed negative (Step S4432: NO), this means that there is a possibility that the position of the point E is not correctly displaced in the direction of the major axis $AX_{100}$, that is, that there is a possibility that the second support part 104, which is a movable support part, is not operating normally (e.g., there is a possibility that the reaction vessel 100 contacts the conveyance mechanism 120), in which case emergency processing (emergency operation) is performed (Step S4433). This is implemented by the emergency operation control unit 290. This emergency processing may be, for example, processing for controlling each heater so as to decrease the temperature increase rate of the reaction vessel 100, processing for stopping (performing an emergency stop of) the temperature increase in the reaction vessel 100, or other processing. Accordingly, the above problem 3 is solved.

<Emergency Processing Example 2>

Next, an emergency processing example 2 will be described.

The difference between the emergency processing example 1 and the emergency processing example 2 is that while the time change in the position of the point E after the temperature increase rate is increased is used as a criterion for making a transition to emergency processing (emergency operation) in the emergency processing example 1, a degree of deviation from "an ideal expansion" is used as a criterion for making a transition to emergency processing (emergency operation) in the emergency processing example 2.

That is, even when the second support part 104, which is a movable support part, is normal, it is possible that the time change in the position of the point E may not occur immediately after the temperature increase rate is increased.

In order to deal with the above problem, in the emergency processing example 2, a threshold at which the deviation between the desirable displacement rate V2 and the actual displacement rate V1 is allowed is set in advance, and the operation moves to the emergency operation when the deviation between the desirable displacement rate V2 and the actual displacement rate V1 exceeds the above threshold.

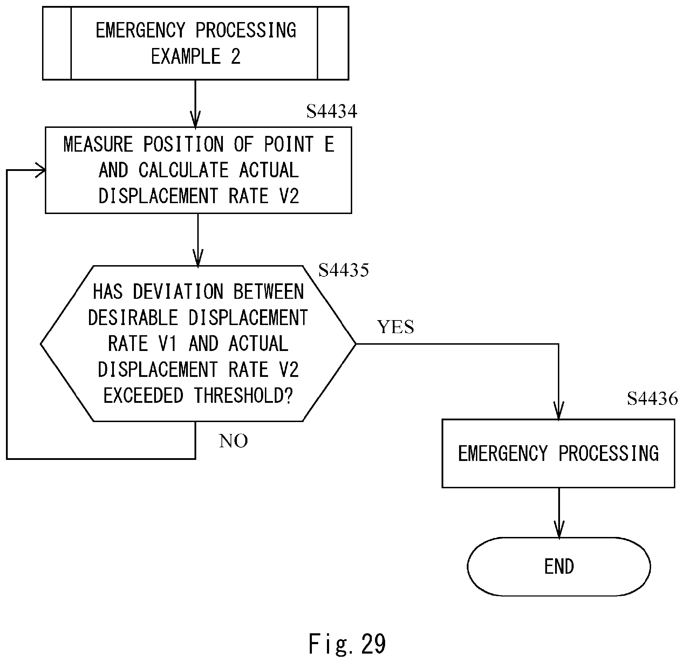

Next, with reference to Fig. 29, an emergency processing example 2 will be described in detail.

Fig. 29 is a flowchart of the emergency processing example 2. The emergency processing example 2 is performed in Step S443 (see Fig. 26).

First, the position of the point E is measured and the actual displacement rate V2 is calculated (Step S4434). This is implemented by the second displacement rate calculation unit 209. Specifically, the second displacement rate calculation unit 209 calculates the actual displacement rate V2 of the point E based on the actual positions (a plurality of positions that have been measured at times different from one another and have been corrected by the above correction value (Hm)) of the point E (specific part) measured by the position measurement apparatus 260.

Next, when the deviation between the desirable displacement rate V1 and the actual displacement rate V2 has not exceeded the threshold (Step S4435: NO), this means that the position of the point E is correctly displaced in the direction of the major axis $AX_{100}$ in accordance with the increase in the temperature increase rate, in which case the process moves to Step S4434 without performing emergency processing (emergency operation), and after that the following processing is repeatedly performed.

On the other hand, when the deviation between the desirable displacement rate V1 and the actual displacement rate V2 has exceeded the threshold (Step S4435: YES), this means that although the temperature increase rate has been increased, the position of the point E is not correctly displaced in the direction of the major axis $AX_{100}$, that is, there is a possibility that the second support part 104, which is a movable support part, is not operating normally (e.g., there is a possibility that the reaction vessel 100 contacts the conveyance mechanism 120), in which case emergency processing (emergency operation) is performed (Step S4436). This is implemented by the emergency operation control unit 290. This emergency processing may be, for example, processing for controlling each heater so as to decrease the temperature increase rate of the reaction vessel 100, processing for stopping (performing an emergency stop of) the temperature increase in the reaction vessel 100, or other processing. Accordingly, the above problem 3 is solved.

<Emergency Processing Example 3>

Next, an emergency processing example 3 will be described.

The emergency processing example 3 corresponds to the one in which Step S4437 is added to the above emergency processing example 2 (see Fig. 29).

The emergency processing example 1 is different from the emergency processing example 3 in that, while the time change in the position of the point E after the temperature increase rate is increased is used as a criterion for making a transition to emergency processing in the emergency processing example 1, "behavior different from that in a steady state" is used as a criterion for making a transition to the emergency processing in the emergency operation example 3.

In an actual production operation, the temperature increase and the temperature decrease are performed in the same pattern every time. In the emergency processing example 3, a threshold at which the deviation from the "behavior different from that in a steady state" is allowed is set in advance, and the operation moves to the emergency operation when the degree of the deviation exceeds this threshold.

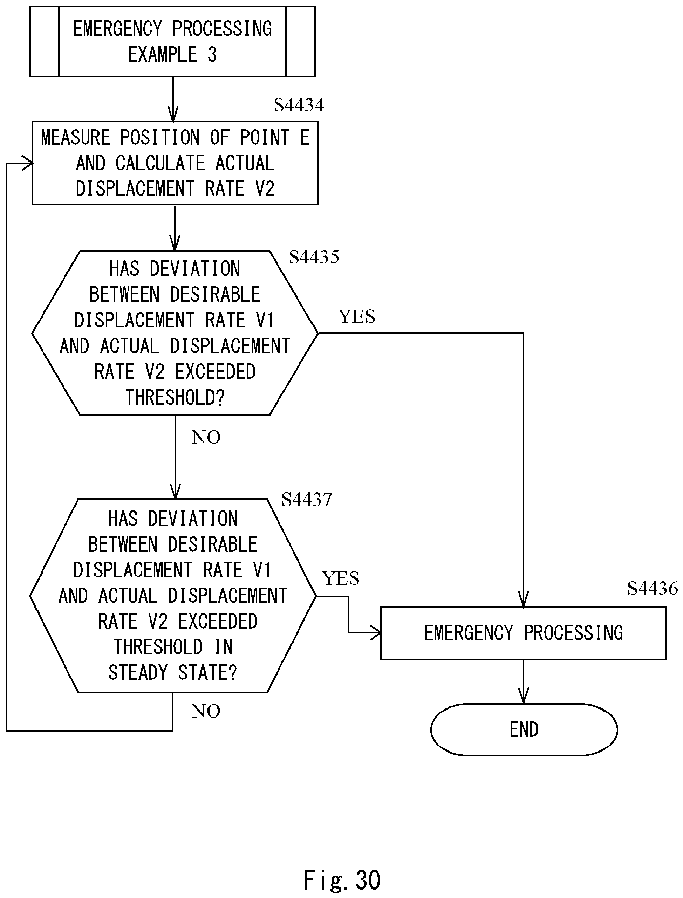

Next, with reference to Fig. 30, the emergency processing example 3 will be described in detail.

Fig. 30 is a flowchart of the emergency operation example 3. The emergency operation example 3 is performed in Step S443 (see Fig. 26).

First, the position of the point E is measured and the actual displacement rate V2 is calculated (Step S4434). This is implemented by the second displacement rate calculation unit 209. Specifically, the second displacement rate calculation unit 209 calculates the actual displacement rate V2 of the point E based on the actual positions (a plurality of positions that have been measured at times different from one another and have been corrected by the above correction value (Hm)) of the point E (specific part) measured by the position measurement apparatus 260.

Next, when the deviation between the desirable displacement rate V1 and the actual displacement rate V2 has not exceeded the threshold (Step S4435: NO) and the deviation between the desirable displacement rate V1 and the actual displacement rate V2 has not exceeded the threshold in the steady state (Step S4437: NO), this means that the position of the point E is correctly displaced in the direction of the major axis $AX_{100}$ in accordance with the increase in the temperature increase rate, in which case the process moves to Step S4434 without performing emergency processing (emergency operation), and after that the following processing is repeatedly performed.

On the other hand, when the deviation between the desirable displacement rate V1 and the actual displacement rate V2 has exceeded the threshold (Step S4435: YES), or when the deviation between the desirable displacement rate V1 and the actual displacement rate V2 has exceeded a threshold in the steady state (Step S4437: YES), this means that although the temperature increase rate has been increased, the position of the point E is not correctly displaced in the direction of the major axis $AX_{100}$, that is, there is a possibility that the second support part 104, which is a movable support part, is not operating normally (e.g., there is a possibility that the reaction vessel 100 contacts the conveyance mechanism 120), in which case emergency processing (emergency operation) is performed (Step S4436). This is implemented by the emergency operation control unit 290. This emergency processing may be, for example, processing for controlling each heater so as to decrease the temperature increase rate of the reaction vessel 100, processing for stopping (performing an emergency stop of) the temperature increase in the reaction vessel 100, or other processing. Accordingly, the above problem 3 is solved.

<Third Embodiment>

Next, as a third embodiment, a configuration example 2 for solving the above first and second problems will be described. Hereinafter, a reaction apparatus according to the third embodiment will be referred to as a reaction apparatus 10C.

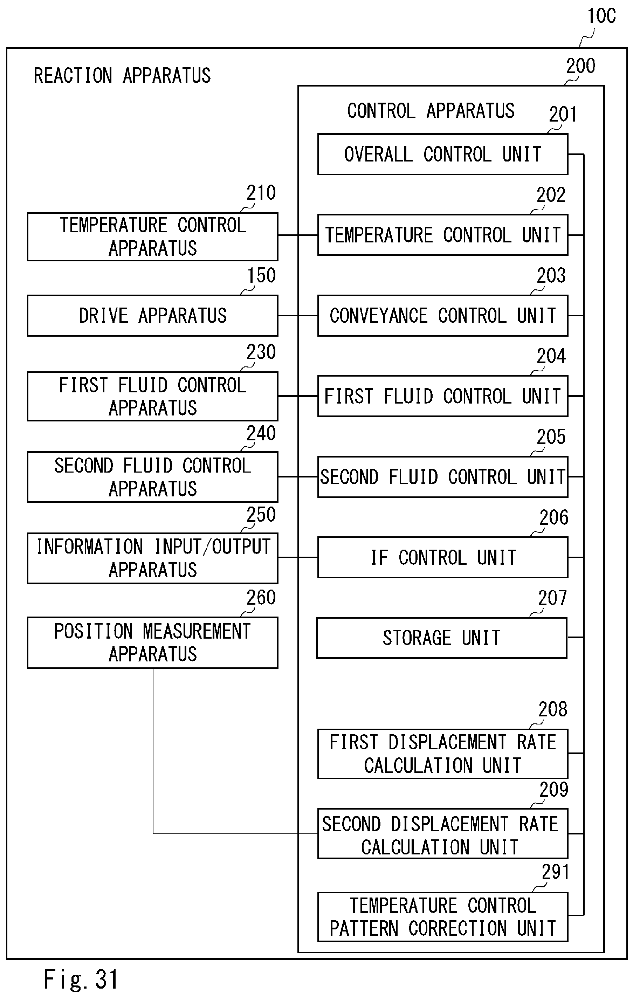

Fig. 31 is a block diagram of the reaction apparatus 10C according to the third embodiment.

As shown in Fig. 31, the reaction apparatus 10C in the third embodiment corresponds to the one in which a temperature control pattern correction unit 291 is added to the reaction apparatus 10A in the first embodiment. Hereinafter, the configurations similar to those in the reaction apparatus 10A in the above first embodiment are denoted by the same reference symbols, and descriptions thereof will be omitted as appropriate.

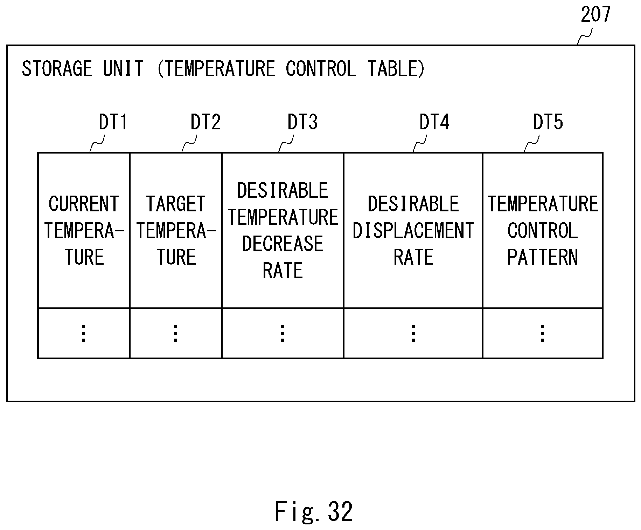

In the reaction apparatus 10C in the third embodiment, as shown in Fig. 32, a temperature control table is stored in the storage unit 207. Fig. 32 shows one example of the temperature control table stored in the storage unit 207. The storage unit 207 shows one example of the temperature control pattern storage unit and the displacement rate storage unit according to the present disclosure.

As shown in Fig. 32, the temperature control table includes items of: a current temperature DT1, a target temperature DT2, a desirable temperature decrease rate DT3, a desirable displacement rate DT4, and a temperature control pattern DT5.

The current temperature of the reaction vessel 100 is stored as the current temperature DT1. The target temperature of the reaction vessel 100 is stored as the target temperature DT2. The temperature decrease rate (or a temperature increase rate) set in consideration of the above <desirable temperature conditions> is stored as the desirable temperature decrease rate (or temperature increase rate) DT3. The displacement rate (desirable displacement rate V1) calculated by the first displacement rate calculation unit 208 is stored as the desirable displacement rate DT4. The control pattern of each heater that the temperature control unit 202 has actually controlled until the temperature of the reaction vessel 100 (intermediate part A3) reaches the target temperature DT2 from the current temperature DT1, such as, for example, information on the current value for each time energized to each heater, is stored as the temperature control pattern DT5.

The temperature control pattern correction unit 291 corrects the temperature control pattern DT5 in such a way that the displacement rate (V1 or V2) of the point E (specific part) of the reaction vessel 100 becomes as high as possible. For example, the control patterns (for a plurality of times) of each heater that the temperature control unit 202 has actually controlled until the temperature of the reaction vessel 100 (intermediate part A3) reaches the target temperature DT2 from the current temperature DT1 are stored in the storage unit 207 or the like. Then, the temperature control pattern correction unit 291 stores (overwrites) one of the stored temperature control patterns (for the plurality of times) whose displacement rate (V1 or V2) becomes the highest in the storage unit 207 (temperature control pattern DT5).

Alternatively, the temperature control pattern correction unit 291 may correct the temperature control pattern DT5 in such a way that the displacement rate (V1 or V2) of the point E (specific part) of the reaction vessel 100 becomes as high as possible based on the result of machine learning. For example, a learning model may be generated by a learning engine (e.g., scikit-learn), a temperature control pattern in which the displacement rate ($V_E$ or DT4) becomes as high as possible may be predicted (estimated) by the above learning model, and the predicted temperature control pattern may be stored (overwritten) in the storage unit 207 (temperature control pattern DT5). The temperature control pattern correction unit 291 is implemented, for example, by the control apparatus 200 executing a predetermined program. The temperature control pattern correction unit 291 is not limited to being implemented by a predetermined program and may be implemented by hardware.

The correction performed by the temperature control pattern correction unit 291 may be manually performed based on experience. For example, the temperature control pattern may be corrected based on experience in such a way that the displacement rate (V1 or V2) of the point E (specific part) of the reaction vessel 100 becomes as high as possible, and the corrected temperature control pattern may be stored (overwritten) in the storage unit 207 (temperature control pattern DT5).

<Operation Example 1 of Reaction Apparatus 10C>

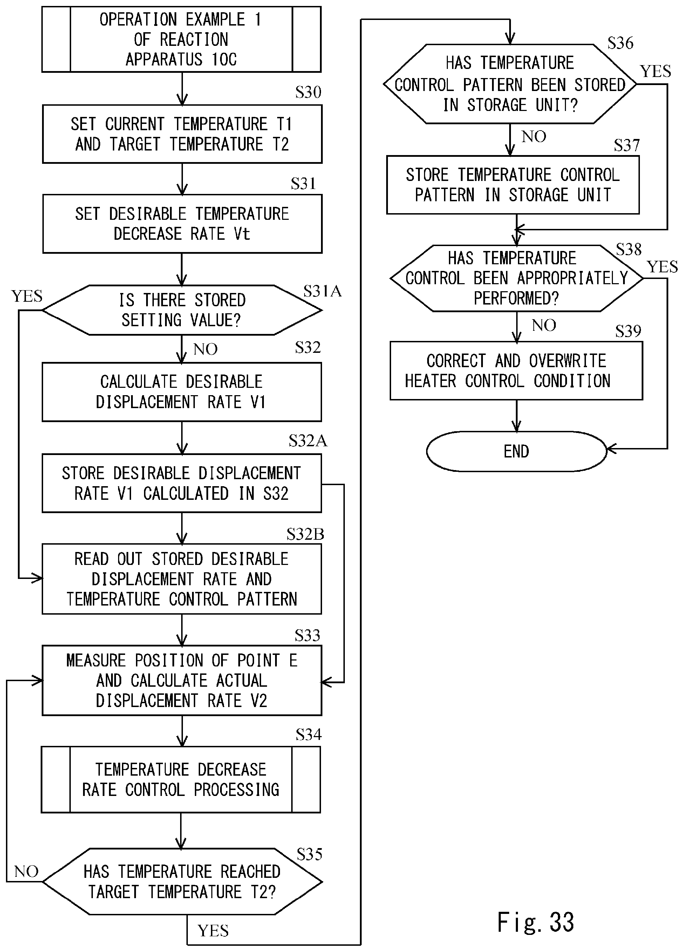

Next, with reference to Fig. 33, an operation example 1 of the reaction apparatus 10C will be described.

Fig. 33 is a flowchart of the operation example 1 of the reaction apparatus 10C.

The operation example 1 of the reaction apparatus 10C corresponds to the one in which Steps S31A, S32A, S32B, and S36-S39 are added to the operation example 1 of the above reaction apparatus 10A (see Fig. 22).

Hereinafter, as the operation example 1 of the reaction apparatus 10C, an operation example when the temperature of the reaction vessel 100 is controlled to decrease (cooling control) from the current temperature 1000°C to the target temperature 500°C will be described.

First, the current temperature T1 (1000°C), the target temperature T2 (500°C), and the desirable temperature decrease rate Vt (e.g., 1°C/min) are set (Steps S30-S31). They are set, for example, by an operator manually.

Next, when there is no stored setting value (Step S31A: NO), that is, when temperature control patterns corresponding to the current temperature T1 and the target temperature T2 are not stored in the storage unit 207 (temperature control pattern DT5), the desirable displacement rate V1 is calculated (Step S32). This is implemented, for example, by the first displacement rate calculation unit 208. Specifically, the first displacement rate calculation unit 208 calculates the displacement rate (desirable displacement rate V1) of the point E of the reaction vessel 100 when the temperature of the reaction vessel 100 (intermediate part A3) is controlled to change from the current temperature T1 to the target temperature T2 at a desirable temperature decrease rate Vt. At this time, the first displacement rate calculation unit 208 calculates the desirable temperature decrease rate Vt in consideration of, for example, material properties or the like such as a thermal expansion coefficient of each component forming the reaction vessel 100. This desirable displacement rate V1 (calculated value) can be expressed, for example, by a straight line C3 in Fig. 21.

Next, the desirable displacement rate V1 calculated in Step S32 is stored (Step S32A). Specifically, the desirable displacement rate V1 calculated in Step S32 is stored in the storage unit 207 (desirable displacement rate DT4) in such a way that it is associated with the current temperature DT1, the target temperature DT2, and the desirable temperature decrease rate DT3. Note that, as the current temperature DT1, the target temperature DT2, and the desirable temperature decrease rate DT3, the current temperature T1 and the target temperature T2 set in Step S30 and the desirable temperature decrease rate Vt set in Step S31 are stored.

Next, the position of the point E is measured and the actual displacement rate V2 (measured value) is calculated (Step S33). This is implemented by the second displacement rate calculation unit 209. Specifically, the second displacement rate calculation unit 209 calculates the actual displacement rate V2 of the point E based on actual positions (a plurality of positions that have been measured at times different from one another and have been corrected by the above correction value (Hm)) of the point E (specific part) measured by the position measurement apparatus 260. This actual displacement rate V2 (measured value) of the point E can be expressed, for example, by a curved line C4 in Fig. 21.

Next, temperature decrease rate control processing is performed (Step S34). This temperature decrease rate control processing, which is processing for controlling the temperature decrease rate of the reaction vessel 100 (intermediate part A3) in such a way that the actual displacement rate V2 of the point E calculated in Step S33 follows (matches) the desirable displacement rate V1 of the point E calculated in Step S32, is implemented by the temperature control unit 202. Since this temperature decrease rate control processing has already been described above in the operation example 1 of the reaction apparatus 10A (see Fig. 23), the description thereof will be omitted.

The processing in the above Steps S33 and S34 is repeatedly performed until the temperature of the reaction vessel 100 reaches the target temperature T2 set in Step S30 (Step S35: NO).

Next, when the temperature of the reaction vessel 100 reaches the target temperature T2 (Step S35: YES) and the temperature control pattern has not been stored in the storage unit 207 (temperature control pattern DT5) (Step S36: NO), the temperature control pattern is stored in the storage unit 207 (temperature control pattern DT5) (Step S37). The temperature control pattern stored here is the control pattern of each heater that the temperature control unit 202 has actually controlled until the temperature of the reaction vessel 100 (intermediate part A3) reaches the target temperature T2 from the current temperature T1 in Step S34, for example, information on the value of the current flowing through each heater for each time. This temperature control pattern is stored in the storage unit 207 (temperature control pattern DT5) in such a way that it is associated with the current temperature DT1, the target temperature DT2, and the desirable temperature decrease rate DT3.

Next, it is determined whether or not the temperature control has been performed properly (Step S38). This is implemented, for example, by the control apparatus 200 executing a predetermined program.

As a result, when it is determined that the temperature control has been appropriately performed (Step S38: YES), the operation example 1 of the reaction apparatus 10C is ended.

On the other hand, when it is determined that the temperature control has not been appropriately performed (Step S38: NO), the heater control condition (the temperature control pattern stored in Step S37) is corrected and overwritten (Step S39), and the operation example 1 of the reaction apparatus 10C is ended. This correction is implemented by the temperature control pattern correction unit 291. Specifically, the temperature control pattern correction unit 291 corrects the temperature control pattern DT5 in such a way that the displacement rate (V1 or V2) of the point E (specific part) of the reaction vessel 100 becomes as high as possible. For example, the control patterns (for a plurality of times) of each heater that the temperature control unit 202 has actually controlled until the temperature of the reaction vessel 100 (intermediate part A3) reaches the target temperature DT2 from the current temperature DT1 are stored in the storage unit 207 or the like. Then, the temperature control pattern correction unit 291 stores (overwrites) one of the stored temperature control patterns (for the plurality of times) whose displacement rate (V1 or V2) becomes the highest in the storage unit 207 (temperature control pattern DT5). Note that the processing in Steps S38 and S39 may be manually performed based on experience.

As described above, with the operation example 1 of the reaction apparatus 10C, the actual displacement rate V2 of the point E follows the desirable displacement rate V1 of the point E until the temperature of the reaction vessel 100 reaches the target temperature T2 (see Fig. 21). Accordingly, the above first and second problems are solved.

Further, with the operation example 1 of the reaction apparatus 10C, storing the temperature control pattern in Step S37 brings the following advantages.

That is, by storing the temperature control pattern in Step S37, when the current temperature T1 the same as that at the previous time and the target temperature T2 the same as that at the previous time are set in Step S30 and the desirable temperature decrease rate Vt the same as that at the previous time is set in Step S31 next time, it is determined that there is a setting value stored in Step S31A (Step S31A: YES), that is, the desirable displacement rate and the temperature control pattern corresponding to the current temperature T1 and the target temperature T2 set in Step S30 and the desirable temperature decrease rate Vt set in Step S31 are stored in the storage unit 207 (desirable displacement rate DT4, temperature control pattern DT5), and the desirable displacement rate and the temperature control pattern are read out from the storage unit 207 (desirable displacement rate DT4, temperature control pattern DT5) (Step S32B), which are used in the following processing. Therefore, there is an advantage that the processing in Steps S32 and S32A can be omitted.

Further, by performing the processing in Steps S37-S39, the following advantages are obtained. That is, even when the desirable displacement rate and the temperature control pattern based on the past experience have been read out from the storage unit 207, the actual displacement rate in the pattern that is currently being executed may not be exactly the same as that in the past. Therefore, when the desirable displacement rate and the temperature control pattern based on the past experience have been executed, the past displacement rate and the current displacement rate are both stored in the storage unit 207 (Step S37). When there is a difference between them, it is determined whether or not the worker can allow this difference. When this difference cannot be allowed, the worker appropriately corrects the control condition (heater control condition), and the result is further stored (overwritten) in the storage unit 207 (Step S39). Accordingly, there is an advantage that the storage unit 207 acquires new data for machine learning and this data can be used in calculations for finding laws for temperature control patterns by comparing this new data with the past data.

<Operation Example 2 of Reaction Apparatus 10C>

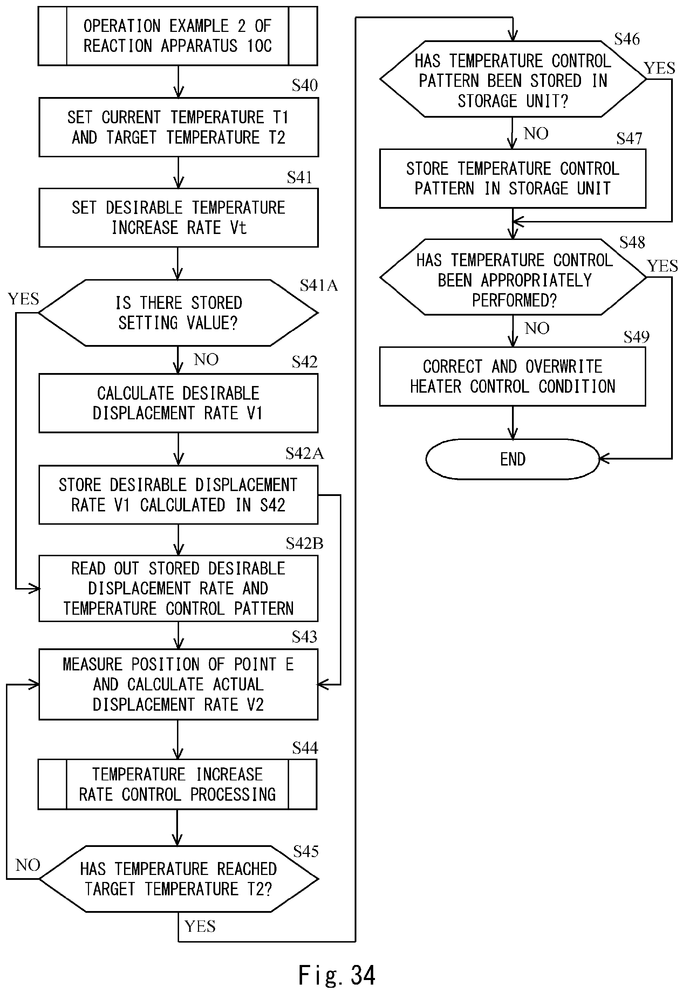

Next, with reference to Fig. 34, an operation example 2 of the reaction apparatus 10C will be described. While the operation example 1 of the reaction apparatus 10C is the example of the temperature decrease control (cooling control) of the reaction vessel 100, the operation example 2 of the reaction apparatus 10C is an example of temperature increase control (heating control) in the reaction vessel 100.

Fig. 34 is a flowchart of the operation example 2 of the reaction apparatus 10C.

Hereinafter, as the operation example 2 of the reaction apparatus 10C, an operation example when the temperature of the reaction vessel 100 is controlled to increase (heating control) from the current temperature 500°C to the target temperature 1000°C will be described.

First, the current temperature T1 (500°C), the target temperature T2 (1000°C), and the desirable temperature decrease rate Vt (e.g., 1°C/min) are set (Step S40-S41). They are set, for example, by an operator manually.

Next, when there is no stored setting value (Step S41A: NO), that is, when the temperature control patterns corresponding to the current temperature T1 and the target temperature T2 are not stored in the storage unit 207 (temperature control pattern DT5), the desirable displacement rate V1 is calculated (Step S42). This is implemented, for example, by the first displacement rate calculation unit 208. Specifically, the first displacement rate calculation unit 208 calculates the displacement rate (desirable displacement rate V1) of the point E of the reaction vessel 100 when the temperature of the reaction vessel 100 (intermediate part A3) is controlled to change from the current temperature T1 to the target temperature T2 at a desirable temperature decrease rate Vt. At this time, the first displacement rate calculation unit 208 calculates the desirable temperature decrease rate Vt in consideration of, for example, material properties or the like such as a thermal expansion coefficient of each component forming the reaction vessel 100. This desirable displacement rate V1 (calculated value) can be expressed, for example, by a straight line C5 in Fig. 25.

Next, the desirable displacement rate V1 calculated in Step S42 is stored (Step S42A). Specifically, the desirable displacement rate V1 calculated in Step S42 is stored in the storage unit 207 (desirable displacement rate DT4) in such a way that it is associated with the current temperature DT1, the target temperature DT2, and the desirable temperature decrease rate DT3. As the current temperature DT1, the target temperature DT2, and the desirable temperature decrease rate DT3, the current temperature T1 and the target temperature T2 set in Step S40 and the desirable temperature decrease rate Vt set in Step S31 are stored.

Next, the position of the point E is measured and the actual displacement rate V2 (measured value) is calculated (Step S43). This is implemented by the second displacement rate calculation unit 209. Specifically, the second displacement rate calculation unit 209 calculates the actual displacement rate V2 of the point E based on the actual positions (a plurality of positions that have been measured at times different from one another and have been corrected by the above correction value (Hm)) of the point E (specific part) measured by the position measurement apparatus 260. The actual displacement rate V2 (measured value) of the point E can be expressed, for example, by a curved line C6 in Fig. 25.

Next, temperature increase rate control processing is performed (Step S44). This temperature increase rate control processing, which is processing for controlling the temperature increase rate of the reaction vessel 100 (intermediate part A3) in such a way that the actual displacement rate V2 of the point E calculated in Step S43 follows (matches) the desirable displacement rate V1 of the point E calculated in Step S42, is implemented by the temperature control unit 202. Since this temperature increase rate control processing has already been described above in the operation example 2 of the reaction apparatus 10A (see Fig. 26), the description thereof will be omitted.

The processing in the above Steps S43 and S44 is repeatedly performed until the temperature of the reaction vessel 100 reaches the target temperature T2 set in Step S40 (Step S45: NO).

Next, when the temperature of the reaction vessel 100 reaches the target temperature T2 (Step S45: YES) and the temperature control pattern has not been stored in the storage unit 207 (temperature control pattern DT5) (Step S46: NO), the temperature control pattern is stored in the storage unit 207 (temperature control pattern DT5) (Step S47). The temperature control pattern stored here is the control pattern of each heater that the temperature control unit 202 has actually controlled until the temperature of the reaction vessel 100 (intermediate part A3) reaches the target temperature T2 from the current temperature T1 in Step S44, for example, information on the value of the current flowing through each heater for each time. This temperature control pattern is stored in the storage unit 207 (temperature control pattern DT5) in such a way that it is associated with the current temperature DT1, the target temperature DT2, and the desirable temperature decrease rate DT3.

Next, it is determined whether or not the temperature control has been performed properly (Step S48). This is implemented, for example, by the control apparatus 200 executing a predetermined program.

As a result, when it is determined that the temperature control has been appropriately performed (Step S48: YES), the operation example 2 of the reaction apparatus 10C is ended.

On the other hand, when it is determined that the temperature control has not been appropriately performed (Step S48: NO), the heater control condition (the temperature control pattern stored in Step S47) is corrected and overwritten (Step S49), and the operation example 2 of the reaction apparatus 10C is ended. This correction is implemented by the temperature control pattern correction unit 291. Specifically, the temperature control pattern correction unit 291 corrects the temperature control pattern DT5 in such a way that the displacement rate (V1 or V2) of the point E (specific part) of the reaction vessel 100 becomes as high as possible. For example, the control patterns (for a plurality of times) of each heater that the temperature control unit 202 has actually controlled until the temperature of the reaction vessel 100 (intermediate part A3) reaches the target temperature DT2 from the current temperature DT1 are stored in the storage unit 207 or the like. Then, the temperature control pattern correction unit 291 stores (overwrites) one of the stored temperature control patterns (for the plurality of times) whose displacement rate (V1 or V2) becomes the highest in the storage unit 207 (temperature control pattern DT5). Note that the processing in Steps S48 and S49 can be manually performed based on the experience.

As described above, with the operation example 2 of the reaction apparatus 10C, the actual displacement rate V2 of the point E follows the desirable displacement rate V1 of the point E until the temperature of the reaction vessel 100 reaches the target temperature T2 (see Fig. 25). Accordingly, the above first and second problems are solved.

Further, with the operation example 2 of the reaction apparatus 10C, storing the temperature control pattern in Step S37 brings the following advantages.

That is, by storing the temperature control pattern in Step S47, when the current temperature T1 the same as that at the previous time and the target temperature T2 the same as that at the previous time are set in Step S40 and the desirable temperature increase rate Vt the same as that at the previous time is set in Step S41 next time, it is determined that there is a setting value stored in Step S41A (Step S41A: YES), that is, the desirable displacement rate and the temperature control pattern corresponding to the current temperature T1 and the target temperature T2 set in Step S40 and the desirable temperature increase rate Vt set in Step S31 are stored in the storage unit 207 (desirable displacement rate DT4, temperature control pattern DT5), and the desirable displacement rate and the temperature control pattern are read out from the storage unit 207 (desirable displacement rate DT4, temperature control pattern DT5) (Step S42B), which are used in the following processing. Therefore, there is an advantage that the processing in Steps S42 and S42A can be omitted.

Further, by performing the processing in Steps S47-S49, the following advantages are obtained. That is, even when the desirable displacement rate and the temperature control pattern based on the past experience have been read out from the storage unit 207, the actual displacement rate in the pattern that is currently being executed may not be exactly the same as that in the past. Therefore, when the desirable displacement rate and the temperature control pattern based on the past experience have been executed, the past displacement rate and the current displacement rate are both stored in the storage unit 207 (Step S47). When there is a difference between them, it is determined whether or not the worker can allow this difference. When this difference cannot be allowed, the worker appropriately corrects the control condition (heater control condition), and the result is further stored (overwritten) in the storage unit 207 (Step S49). Accordingly, there is an advantage that the storage unit 207 acquires new data for machine learning and this data can be used in calculations for finding laws for temperature control patterns by comparing this new data with the past data.

In the operation example 2 of the reaction apparatus 10C as well, the above <Emergency Processing Example 1>-<Emergency Processing Example 3> can be applied. Accordingly, in the operation example 2 of the reaction apparatus 10C as well, the above problem 3 is solved.

While the invention made by the present inventors has been specifically described with reference to the embodiments, the present invention is not limited to the embodiments already described, and it is needless to say that various changes can be made without departing from the spirit of the present invention.

For example, in each of the above embodiments, the example in which the reaction apparatus according to the present disclosure is applied to a reaction apparatus 10 (10A-10C) including a reaction vessel 100 including one end side A1 supported (fixedly supported) by a first support part 103 in a state in which the one end side A1 is immovable and the other end side A2 supported (movably supported) by a second support part 104 in a state in which the other end side A2 is movable has been described. However, it is merely an example. For example, the reaction apparatus according to the present disclosure can be applied to a reaction apparatus 10 (10A-10C) including a reaction vessel (not shown) in which each of the one end side A1 and the other end side A2 is supported (movably supported) in a state in which they are movable.

This application is based upon and claims the benefit of priority from Japanese patent application No. 2023-158236, filed on September 22, 2023, the disclosure of which is incorporated herein in its entirety by reference.

Reference Signs List

| | |
|---|---|
| 10, 10A, 10B, 10C | Reaction Apparatus |
| 100 | Reaction Vessel |
| 101 | Supply Port |
| 102 | Delivery Port |
| 103 | First Support Part |
| 104 | Second Support Part |
| 104a | Protruding Part |
| 104b | Upper Surface |
| 104c, 104d | Standing Part |
| 106, 107 | Shaft Bearing |
| 108 | Lid Part |
| 109 | Flange Part |
| 109a | Recessed Part |
| 109b | Lower Surface |
| 109c, 109d | Projection Part |
| 110 | Temperature Control Region |
| 111 | Friction Reducing Member |
| 112, 113 | Shaft Bearing |
| 114 | Flange Part |
| 116 | Reaction Vessel Drive Apparatus |
| 120 | Screw |
| 121 | Protruding Part |
| 130 | First Fluid Control Region |
| 131 | First Fluid Inlet |
| 132 | First Fluid Outlet |
| 133 | First Fluid Supply Pipe |
| 134 | First Valve |
| 140 | Second Fluid Control Region |
| 141 | Second Fluid Inlet |
| 142 | Second Fluid Outlet |
| 143 | Second Fluid Supply Pipe |
| 144 | Second Valve |
| 150 | Drive Apparatus |
| 151 | Motor |
| 152 | Reducer |
| 170 | Floor Surface |
| 200 | Control Apparatus |
| 201 | Overall Control Unit |
| 202 | Temperature Control Unit |
| 203 | Screw Rotation Control Unit |
| 204 | First Fluid Control Unit |
| 205 | Second Fluid Control Unit |
| 206 | IF Control Unit |
| 207 | Storage Unit |
| 210 | Temperature Control Apparatus |
| 230 | First Fluid Control Apparatus |
| 240 | Second Fluid Control Apparatus |
| 250 | Information Input/Output Unit |
| A1 | One End Side |
| A2 | Other End Side |
| A3 | Intermediate Part |
| B1 | One End Side |
| B2 | Other End Side |
| E | Specific Part |

G1-G4            Gap
R10             Substance to be Treated
R11             Product

**Claims**

1. A reaction apparatus comprising:

   a cylindrical reaction vessel including an intermediate part between a supply part and a delivery part;
   a temperature control unit configured to control a temperature of the intermediate part;
   the supply part configured to supply a substance to be treated to the reaction vessel and the delivery part configured to deliver a product from the reaction vessel; and
   a conveyance mechanism configured to convey the substance to be treated from a side of the reaction vessel close to the supply part to a side of the reaction vessel close to the delivery part through the intermediate part, wherein
   the temperature control unit controls a temperature increase rate or a temperature decrease rate of the intermediate part in such a way that an actual displacement rate of a specific part of the reaction vessel follows a desirable displacement rate of the specific part of the reaction vessel.

2. The reaction apparatus according to claim 1, further comprising:

   a displacement rate storage unit configured to store the desirable displacement rate of the specific part;
   a position measurement apparatus configured to measure an actual position of the specific part of the reaction vessel; and
   a displacement rate calculation unit configured to calculate the actual displacement rate of the specific part based on the actual position of the specific part measured by the position measurement apparatus.

3. The reaction apparatus according to claim 2, wherein

   the reaction vessel includes a projecting part that is projected from a center of its longitudinal direction, and
   the specific part is a tip end side of the projecting part.

4. The reaction apparatus according to claim 3, wherein the displacement rate calculation unit calculates the actual displacement rate of the specific part based on the actual position of the specified part measured by the position measurement apparatus and a correction value.

5. The reaction apparatus according to claim 1, wherein the desirable displacement rate is a displacement rate considered in such a way that a deviation between a temperature in an upper part of the reaction vessel and a temperature in a lower part of the reaction vessel becomes as small as possible.

6. The reaction apparatus according to claim 3, wherein the position measurement apparatus is a contact-type position measurement apparatus including a contact probe that contacts a tip end side of the projecting part.

7. The reaction apparatus according to claim 1, wherein the temperature control unit performs control to increase a temperature increase rate or a temperature decrease rate of the intermediate part when a deviation between the actual displacement rate of the specific part and the desirable displacement rate of the specific part is a positive deviation and performs control to decrease the temperature increase rate or the temperature decrease rate of the intermediate part when the deviation between the actual displacement rate of the specific part and the desirable displacement rate of the specific part is a negative deviation.

8. The reaction apparatus according to claim 2, further comprising a temperature control pattern storage unit configured to store a temperature control pattern executed by the temperature control unit, wherein the temperature control unit controls a temperature increase rate or a temperature decrease rate of the intermediate part based on the temperature control pattern.

9. The reaction apparatus according to claim 8, further comprising a temperature control pattern correction unit configured to correct the temperature control pattern in such a manner that a deviation between a temperature in an upper part of the reaction vessel and a temperature in a lower part of the reaction vessel becomes as small as possible and the displacement rate of the specific part becomes as high as possible.

10. The reaction apparatus according to claim 9, wherein the temperature control pattern correction unit corrects the temperature control pattern based on a result of machine learning.

11. The reaction apparatus according to claim 1, further comprising an emergency operation control unit configured to execute emergency processing for avoiding a situation in which the reaction apparatus can no longer normally operate,
wherein, in a case in which the temperature control unit controls the temperature increase rate of the intermediate part and a predetermined condition is satisfied, the emergency operation control unit executes the emergency processing.

12. The reaction apparatus according to claim 11, wherein the case in which the predetermined condition is satisfied is a case in which a time change in the position of the specific part of the reaction vessel turns negative.

13. The reaction apparatus according to claim 11, wherein the case in which the predetermined condition is satisfied is a case in which a deviation between the desirable displacement rate and the actual displacement rate exceeds a threshold.

Fig. 1

Fig. 2

START

S11
RECEIVE SUBSTANCE TO BE TREATED

S12
CONTROL TEMPERATURE OF REACTION FURNACE

S13
CONVEY SUBSTANCE TO BE TREATED

S14
CAUSE FIRST FLUID TO PASS THROUGH
FIRST ATMOSPHERE CONTROL REGION

S15
CAUSE SECOND FLUID TO PASS THROUGH
SECOND ATMOSPHERE CONTROL REGION

S16
DELIVER PRODUCT

END

Fig. 3

Fig. 4

Fig. 5A

AR2

100 (A2)

AX₁₀₀

109

104a    109a    109b

G1

104b

104

Fig. 5B

100 (A2)

AX₁₀₀

109

109b

104b

111    111    104

Fig. 5C

Fig. 6

F i g. 7

Fig. 8

Fig. 9

F i g. 10

Fig. 11A

$AX_{100}$

A2

A3

A1

104a

100

Fig. 11B

Fig. 11C

104a

$AX_{100}$

100

Fig. 11D

F i g. 12

202

TEMPERATURE CONTROL UNIT

D3

D2

D1

H1

FIRST HEATING UNIT (ex. HEATER)

H2

SECOND HEATING UNIT (ex. HEATER)

H3

THIRD HEATING UNIT (ex. HEATER)

H4

FOURTH HEATING UNIT (ex. HEATER)

Fig. 13

Fig. 14A

Fig. 14B

Fig. 15

Fig. 16A

TEMPERATURE

TIME

Fig. 16B

TEMPERATURE

TIME

Fig. 17

START

S20
SET CURRENT TEMPERATURE T1
AND TARGET TEMPERATURE T2

S21
SET TEMPERATURE INCREASE RATE Vt

S22
SET INTERMEDIATE TEMPERATURE Tm

S23
INCREASE TEMPERATURE AT TEMPERATURE INCREASE RATE Vt
(CONTROL HEATER IN SUCH WAY THAT TEMPERATURE
BECOMES INTERMEDIATE TEMPERATURE Tm)

S24
NO — HAS TEMPERATURE REACHED
INTERMEDIATE TEMPERATURE Tm?

YES

S25
NO — HAS PRESET STANDBY TIME Tw PASSED?

YES

S26
DECREASE TEMPERATURE AT TEMPERATURE INCREASE RATE Vt
(CONTROL HEATER IN SUCH WAY THAT TEMPERATURE
BECOMES TARGET TEMPERATURE T2)

S27
NO — HAS TEMPERATURE REACHED TARGET TEMPERATURE T2?

YES

END

F i g. 18

Fig. 19

10A

REACTION APPARATUS

200

CONTROL APPARATUS

201

OVERALL CONTROL UNIT

210

TEMPERATURE CONTROL
APPARATUS

202

TEMPERATURE CONTROL UNIT

150

DRIVE APPARATUS

203

CONVEYANCE CONTROL UNIT

230

FIRST FLUID CONTROL
APPARATUS

204

FIRST FLUID CONTROL UNIT

240

SECOND FLUID CONTROL
APPARATUS

205

SECOND FLUID CONTROL UNIT

250

INFORMATION INPUT/OUTPUT
APPARATUS

206

IF CONTROL UNIT

260

POSITION MEASUREMENT
APPARATUS

207

STORAGE UNIT

208

FIRST DISPLACEMENT RATE
CALCULATION UNIT

209

SECOND DISPLACEMENT RATE
CALCULATION UNIT

Fig. 20

Fig. 21

```
┌─────────────────────────────────────────┐
│        OPERATION EXAMPLE 1 OF            │
│        REACTION APPARATUS 10A            │
└─────────────────────────────────────────┘
                    │
                    ▼                    S30
┌─────────────────────────────────────────┐
│        SET CURRENT TEMPERATURE T1        │
│        AND TARGET TEMPERATURE T2         │
└─────────────────────────────────────────┘
                    │
                    ▼                    S31
┌─────────────────────────────────────────┐
│   SET DESIRABLE TEMPERATURE DECREASE RATE Vt   │
└─────────────────────────────────────────┘
                    │
                    ▼                    S32
┌─────────────────────────────────────────┐
│   CALCULATE DESIRABLE DISPLACEMENT RATE V1   │
└─────────────────────────────────────────┘
                    │
                    ▼                    S33
┌─────────────────────────────────────────┐
│        MEASURE POSITION OF POINT E AND   │
│     CALCULATE ACTUAL DISPLACEMENT RATE V2│
└─────────────────────────────────────────┘
                    │
                    ▼                    S34
┌─────────────────────────────────────────┐
│        TEMPERATURE DECREASE RATE         │
│        CONTROL PROCESSING                │
└─────────────────────────────────────────┘
                    │
                    ▼                    S35
         ╱──────────────────────────╲
  NO    ╱   HAS TEMPERATURE REACHED   ╲
 ◄──────┤   TARGET TEMPERATURE T2?    │
         ╲──────────────────────────╱
                    │ YES
                    ▼
              (   END   )
```

Fig. 22

```
┌──┬──────────────────────────────┬──┐  S34
│  │  TEMPERATURE DECREASE RATE    │  │
│  │     CONTROL PROCESSING        │  │
└──┴──────────────────────────────┴──┘
                  │
                  ▼
            ╱────────────╲           S341
          ╱  ARE ACTUAL   ╲
        ╱  DISPLACEMENT RATE V2 ╲
  NO  ╱  AND DESIRABLE DISPLACEMENT ╲
◀────⟨   RATE V1 DEVIATED           ⟩
     ╲    FROM EACH OTHER?         ╱
       ╲                         ╱
         ╲─────────────────────╱
                  │ YES
                  ▼
            ╱────────────╲           S342
          ╱                ╲      NO
        ⟨  POSITIVE DEVIATION?  ⟩─────────────┐
          ╲                ╱                  │
            ╲────────────╱                    │
                  │ YES                        │
                  ▼            S343            ▼            S344
        ┌──────────────────┐        ┌──────────────────┐
        │ INCREASE TEMPERATURE │    │ DECREASE TEMPERATURE │
        │  DECREASE RATE OF    │    │  DECREASE RATE OF    │
        │  REACTION VESSEL     │    │  REACTION VESSEL     │
        └──────────────────┘        └──────────────────┘
                  │                          │
                  ▼                          │
            ╭──────────────────╮◀────────────┘
     ───────▶       RETURN      │
            ╰──────────────────╯
```

Fig. 23

OPERATION EXAMPLE 2 OF
REACTION APPARATUS 10A

S40

SET CURRENT TEMPERATURE T1
AND TARGET TEMPERATURE T2

S41

SET DESIRABLE TEMPERATURE INCREASE RATE Vt

S42

CALCULATE DESIRABLE DISPLACEMENT RATE V1

S43

MEASURE POSITION OF POINT E AND
CALCULATE ACTUAL DISPLACEMENT RATE V2

S44

TEMPERATURE INCREASE RATE
CONTROL PROCESSING

S45

NO — HAS TEMPERATURE REACHED
TARGET TEMPERATURE T2?

YES

END

Fig. 24

Fig. 25

S44

```
┌─────────────────────────────────┐
│  TEMPERATURE INCREASE RATE      │
│  CONTROL PROCESSING             │
└─────────────────────────────────┘
```

S441

ARE ACTUAL
DISPLACEMENT RATE V2
AND DESIRABLE DISPLACEMENT
RATE V1 DEVIATED
FROM EACH OTHER?

NO

YES

S442

POSITIVE DEVIATION?

NO

YES

S443

```
┌─────────────────────────────────┐
│  INCREASE TEMPERATURE           │
│  INCREASE RATE OF               │
│  REACTION VESSEL                │
└─────────────────────────────────┘
```

S444

```
┌─────────────────────────────────┐
│  DECREASE TEMPERATURE           │
│  INCREASE RATE OF               │
│  REACTION VESSEL                │
└─────────────────────────────────┘
```

RETURN

Fig. 26

Fig. 27

EMERGENCY PROCESSING
EXAMPLE 1

↓

MEASURE POSITION
OF POINT E    S4431

↓

HAS TIME CHANGE dX/dt
OF POSITION OF POINT E
CHANGED NEGATIVE?    S4432

NO

YES

EMERGENCY PROCESSING    S4433

↓

END

Fig. 28

EMERGENCY PROCESSING
EXAMPLE 2

S4434

MEASURE POSITION OF POINT E
AND CALCULATE ACTUAL
DISPLACEMENT RATE V2

S4435

HAS DEVIATION BETWEEN
DESIRABLE DISPLACEMENT
RATE V1 AND ACTUAL
DISPLACEMENT RATE V2
EXCEEDED THRESHOLD?

YES

NO

S4436

EMERGENCY PROCESSING

END

Fig. 29

```
                    ┌─┬───────────────────────┬─┐
                    │ │ EMERGENCY PROCESSING  │ │
                    │ │      EXAMPLE 3        │ │
                    └─┴───────────────────────┴─┘
                                 │
                                 │        S4434
                                 ▼
          ┌───────────────────────────────────────┐
          │ MEASURE POSITION OF POINT E            │
     ┌───▶│ AND CALCULATE ACTUAL                   │
     │    │ DISPLACEMENT RATE V2                   │
     │    └───────────────────────────────────────┘
     │                       │
     │                       │           S4435
     │                       ▼
     │              HAS DEVIATION
     │              BETWEEN DESIRABLE
     │              DISPLACEMENT RATE V1
     │              AND ACTUAL DISPLACEMENT      YES
     │              RATE V2 EXCEEDED      ──────────────────┐
     │              THRESHOLD?                              │
     │                       │                              │
     │                       │ NO                           │
     │                       ▼                              │
     │                                  S4437               │
     │              HAS DEVIATION                           │
     │              BETWEEN DESIRABLE                       │
     │              DISPLACEMENT RATE V1                    │
     │              AND ACTUAL DISPLACEMENT   YES            ▼       S4436
     │              RATE V2 EXCEEDED    ───────┐   ┌──────────────────────┐
     │              THRESHOLD IN               └──▶│ EMERGENCY PROCESSING │
     │              STEADY STATE?                  └──────────────────────┘
     │                       │ NO                              │
     └───────────────────────┘                                ▼
                                                         (   END   )
```

F i g. 30

10C

REACTION APPARATUS

CONTROL APPARATUS    200

OVERALL CONTROL UNIT    201

TEMPERATURE CONTROL
APPARATUS    210

TEMPERATURE CONTROL UNIT    202

DRIVE APPARATUS    150

CONVEYANCE CONTROL UNIT    203

FIRST FLUID CONTROL
APPARATUS    230

FIRST FLUID CONTROL UNIT    204

SECOND FLUID CONTROL
APPARATUS    240

SECOND FLUID CONTROL UNIT    205

INFORMATION INPUT/OUTPUT
APPARATUS    250

IF CONTROL UNIT    206

POSITION MEASUREMENT
APPARATUS    260

STORAGE UNIT    207

FIRST DISPLACEMENT RATE
CALCULATION UNIT    208

SECOND DISPLACEMENT RATE
CALCULATION UNIT    209

TEMPERATURE CONTROL
PATTERN CORRECTION UNIT    291

Fig. 31

207

STORAGE UNIT (TEMPERATURE CONTROL TABLE)

DT1     DT2     DT3     DT4     DT5

| CURRENT TEMPERA- TURE | TARGET TEMPERA- TURE | DESIRABLE TEMPERATURE DECREASE RATE | DESIRABLE DISPLACEMENT RATE | TEMPERATURE CONTROL PATTERN |
|---|---|---|---|---|
| ⋮ | ⋮ | ⋮ | ⋮ | ⋮ |

Fig. 32

Fig. 33

Fig. 34

OPERATION EXAMPLE 2 OF
REACTION APPARATUS 10C

S40
SET CURRENT TEMPERATURE T1
AND TARGET TEMPERATURE T2

S41
SET DESIRABLE TEMPERATURE
INCREASE RATE Vt

S41A
IS THERE STORED
SETTING VALUE?
YES
NO

S42
CALCULATE DESIRABLE
DISPLACEMENT RATE V1

S42A
STORE DESIRABLE DISPLACEMENT
RATE V1 CALCULATED IN S42

S42B
READ OUT STORED DESIRABLE
DISPLACEMENT RATE AND
TEMPERATURE CONTROL PATTERN

S43
MEASURE POSITION OF POINT E
AND CALCULATE ACTUAL
DISPLACEMENT RATE V2

S44
TEMPERATURE INCREASE
RATE CONTROL PROCESSING

S45
HAS TEMPERATURE REACHED
TARGET TEMPERATURE T2?
NO
YES

S46
HAS TEMPERATURE CONTROL
PATTERN BEEN STORED IN
STORAGE UNIT?
YES
NO

S47
STORE TEMPERATURE CONTROL
PATTERN IN STORAGE UNIT

S48
HAS TEMPERATURE CONTROL
BEEN APPROPRIATELY
PERFORMED?
YES
NO

S49
CORRECT AND OVERWRITE
HEATER CONTROL CONDITION

END

## INTERNATIONAL SEARCH REPORT

| | International application No. |
|---|---|
| | **PCT/JP2024/019132** |

| | |
|---|---|
| **A.** | **CLASSIFICATION OF SUBJECT MATTER** |

*B01J 19/18*(2006.01)i; *F27B 7/42*(2006.01)i; *F27D 19/00*(2006.01)i; *F27D 21/00*(2006.01)i
FI:   B01J19/18; F27B7/42; F27D19/00 A; F27D21/00 A

According to International Patent Classification (IPC) or to both national classification and IPC

| | |
|---|---|
| **B.** | **FIELDS SEARCHED** |

Minimum documentation searched (classification system followed by classification symbols)

B01J19/18; F27B7/42; F27D19/00; F27D21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 7155360 B1 (THE JAPAN STEEL WORKS, LTD.) 18 October 2022 (2022-10-18) | 1-13 |
| A | JP 2023-48568 A (THE JAPAN STEEL WORKS, LTD.) 07 April 2023 (2023-04-07) | 1-13 |
| A | WO 2023/145841 A1 (ZEON CORPORATION) 03 August 2023 (2023-08-03) | 1-13 |
| A | WO 2019/163607 A1 (PAN PACIFIC COPPER CO., LTD.) 29 August 2019 (2019-08-29) | 1-13 |
| A | JP 2011-27300 A (MURATA MANUFACTURING CO., LTD.) 10 February 2011 (2011-02-10) | 1-13 |
| A | JP 2008-180451 A (MITSUBISHI HEAVY INDUSTRIES, LTD.) 07 August 2008 (2008-08-07) | 1-13 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 July 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/019132**

| Patent document cited in search report | | | Publication date (day/month/year) | Patent family member(s) | | | Publication date (day/month/year) |
|---|---|---|---|---|---|---|---|
| JP | 7155360 | B1 | 18 October 2022 | WO | 2023/013270 | A1 | |
| | | | | CN | 117794636 | A | |
| | | | | KR | 10-2024-0041929 | A | |
| JP | 2023-48568 | A | 07 April 2023 | WO | 2023/053695 | A1 | |
| WO | 2023/145841 | A1 | 03 August 2023 | (Family: none) | | | |
| WO | 2019/163607 | A1 | 29 August 2019 | CN | 110475881 | A | |
| JP | 2011-27300 | A | 10 February 2011 | CN | 101963448 | A | |
| JP | 2008-180451 | A | 07 August 2008 | CN | 101231144 | A | |

Form PCT/ISA/210 (patent family annex) (July 2022)

71

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006290682 A
- JP 2023158236 A